(19) Europäisches Patentamt
European Patent Office
Office européen des brevets

(11) **EP 4 738 725 A1**

(12) **EUROPEAN PATENT APPLICATION**

(43) Date of publication:
**06.05.2026 Bulletin 2026/19**

(21) Application number: **25211015.0**

(22) Date of filing: **24.10.2025**

(51) International Patent Classification (IPC):
*H04B 7/185* (2006.01)     *H04B 7/195* (2006.01)

(52) Cooperative Patent Classification (CPC):
**H04B 7/195; H04B 7/18513; H04B 7/18521**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **04.11.2024 US 202463715888 P**

(71) Applicants:
• **SES Americom, Inc**
  **Princeton, NJ 08540 (US)**

• **Massachusetts Institute of Technology**
  **Cambridge, MA 02139 (US)**

(72) Inventors:
• **Grotz, Joel**
  **L-2220 Luxembourg (LU)**
• **RAO, Chirag**
  **Somerville MA, 02143 (US)**
• **MODIANO, Eytan**
  **Newton, 02468 (US)**

(74) Representative: **Hoffmann Eitle**
**Patent- und Rechtsanwälte PartmbB**
**Arabellastraße 30**
**81925 München (DE)**

(54) **CONTROLLING INTER-SATELLITE COMMUNICATION LINKS IN A CONSTELLATION OF SATELLITES, AND TOPOLOGIES RESULTING THEREFROM**

(57)     Methods and systems are disclosed for assisting in controlling inter-satellite communication links of a constellation of satellites orbiting the Earth. The constellation comprises n orbital planes and m satellites per orbital plane, wherein n and m are positive integer values, $n \neq m$, $n \geq 3$, and $m \geq 3$. The method comprises outputting parameters usable to control satellites of the constellation to establish an inter-satellite communication link topology for transmission of user data, while aiming at reducing latency in the transmission of data through the constellation. Computer programs, computer program products, and computer-readable storage medium are also disclosed.

s10 — outputting parameters usable to control satellites of a constellation to establish an inter-satellite communication link topology for transmission of user data

Fig. 1

EP 4 738 725 A1

## Description

### [Field of technology]

The invention relates to the field of controlling a constellation of satellites orbiting the Earth and, in particular, to controlling inter-satellite communication links in such a satellite constellation. The invention may be used to, though not limited to, assist in providing connectivity, such as for example Internet connectivity, between gateways and/or terminals on or near the Earth's surface.

### [Background]

A constellation of satellites orbiting the Earth, such as low Earth orbit (LEO) satellites, may be used for providing connectivity, such as for example Internet connectivity, to gateways and/or terminals on or near the Earth's surface. This may notably require inter-satellite links (ISL) for satellite-to-satellite communication for transmission of user data through the constellation of satellites. These ISLs may also be called "inter-satellite communication links" and may for example comprise free-space optical ISLs. The terminals may for example be mobile terminals.

In view of the above, there is a constant need for improved solutions to assist in efficiently operating and controlling such satellite networks.

### [Summary]

The present invention aims at addressing, at least partially, the above-mentioned need. The invention includes methods, systems, computer programs, computer program products, and computer-readable storage mediums as defined in the independent claims. Particular embodiments are defined in the dependent claims.

In one embodiment, a method is carried out by a processing device or a set of processing devices, for assisting in controlling inter-satellite communication links of a constellation of satellites orbiting the Earth. The constellation comprises $n$ orbital planes and $m$ satellites per orbital plane, wherein $n$ and $m$ are positive integer values, $n \neq m$, $n \geq 3$, and $m \geq 3$. The method comprises: outputting parameters usable to control satellites of the constellation to establish an inter-satellite communication link topology for transmission of user data, in which, for each satellite of at least a subset of the satellites, (i) an inter-satellite communication link for transmission of user data is established between the satellite, hereinafter referred to as "first satellite", and a second satellite of the constellation, wherein (a) the first satellite is in a first orbital plane; (b) the second satellite is in a second orbital plane adjacent to the first orbital plane; and (c) the position of the second satellite in the second orbital plane is offset from a position of a satellite, hereinafter referred to as "third satellite", in the second orbital plane, the third satellite being closest to the first satellite among the satellites in the second orbital plane; (ii) it is refrained from establishing an inter-satellite communication link for transmission of user data between the first satellite and the third satellite; (iii) it is refrained from establishing an inter-satellite communication link for transmission of user data between the second satellite and any satellite of the first orbital plane other than the first satellite; and (iv) the above (i.e., items (i), (ii), and (iii)) applies regardless of whether the first satellite is latitude-decreasing or latitude-increasing. Furthermore, in the inter-satellite communication link topology, an identical inter-satellite communication link pattern as between the first orbital plane and the second orbital plane is applied between the second orbital plane and a third orbital plane adjacent to the second orbital plane, wherein the third orbital plane is different from the first orbital plane.

In another embodiment, a method is carried out by a processing device or a set of processing devices, for assisting in controlling inter-satellite communication links of a constellation of satellites orbiting the Earth. As in the first embodiment, the constellation comprises $n$ orbital planes and $m$ satellites per orbital plane, wherein $n$ and $m$ are positive integer values, $n \neq m$, $n \geq 3$, and $m \geq 3$. A cross-orbit row is here defined as a group of $n$ satellites, each being in a different orbital plane and, if a satellite $S_1$ in an orbital plane $O_1$ and a satellite $S_2$ in an adjacent orbital plane $O_2$ are the closest to one another, satellites $S_1$ and $S_2$ are in the same cross-orbit row. The method comprises: outputting parameters usable to control satellites of the constellation to establish an inter-satellite communication link topology for transmission of user data, in which, for each satellite of at least a subset of the satellites, (i) an inter-satellite communication link for transmission of user data is established between the satellite, hereinafter referred to as "first satellite", and a second satellite of the constellation, wherein (a) the first satellite is in a first cross-orbit row; (b) the second satellite is in a second cross-orbit row adjacent to the first cross-orbit row; and (c) the position of the second satellite in the second cross-orbit row is offset from a position of a satellite, hereinafter referred to as "third satellite", in the second cross-orbit row, the third satellite being closest to the first satellite among the satellites in the second cross-orbit row; (ii) it is refrained from establishing an inter-satellite communication link for transmission of user data between the first satellite and the third satellite; and (iii) it is refrained from establishing an inter-satellite communication link for transmission of user data between the second satellite and any satellite of the first cross-orbit row other than the first satellite. Furthermore, in the inter-satellite communication link topology, an identical inter-satellite communication link pattern as between the first cross-orbit row and the second cross-orbit row is applied between the second cross-orbit row and a third cross-orbit row adjacent to the second cross-orbit row, the third cross-orbit row being different from the first cross-orbit row.

The methods of the above-referred embodiments allow to assist in controlling inter-satellite communication links in a constellation of satellites while aiming at generally reducing delays (i.e., reducing latency) in the transmission of user data through the constellation, generally ensuring uninterrupted, continuous connections, and/or generally avoiding traffic congestion at specific nodes (i.e., at specific satellites).

The invention also relates, in some embodiments, to a system comprising a plurality of satellites orbiting the Earth and forming an inter-satellite communication link topology established with a method in accordance with any one of the above-described embodiments.

The invention further relates, in some embodiments, to systems for carrying out one of the above-described methods, to a computer program or set of computer programs comprising computer-readable instructions for carrying out one of the above-described methods, and to related computer program products and computer-readable storage mediums.

**[Brief description of the drawings]**

Fig. 1 is a flowchart of a method in one embodiment of the invention;
Fig. 2a is a schematic diagram of part of an inter-satellite communication link topology for transmission of user data in one embodiment of the invention;
Fig. 2b is a schematic diagram of part of an inter-satellite communication link topology for transmission of user data in one embodiment of the invention;
Fig. 3a is a schematic diagram of part of an inter-satellite communication link topology for transmission of user data in one embodiment of the invention;
Fig. 3b is a schematic diagram of an inter-satellite communication link topology for transmission of user data in one embodiment of the invention, with $n \geq 3$ and $m \geq 4$;
Fig. 4 is a schematic diagram of an inter-satellite communication link topology for transmission of user data in one embodiment of the invention, with $n \geq 4$ and $m \geq 3$;
Fig. 5a is a schematic diagram of part of an inter-satellite communication link topology for transmission of user data in one embodiment of the invention, comprising, compared to Fig. 2a, a further intra-orbital communication link for transmission of user data;
Fig. 5b is a schematic diagram of part of an inter-satellite communication link topology for transmission of user data in one embodiment of the invention, comprising, compared to Fig. 2b, two further intra-orbital communication links for transmission of user data;
Fig. 5c is a schematic diagram of an inter-satellite communication link topology for transmission of user data in one embodiment of the invention, with $n \geq 3$ and $m \geq 4$;
Fig. 6 is a schematic diagram of an inter-satellite communication link topology for transmission of user data in one embodiment of the invention, with $n \geq 3$ and $m \geq 5$, comprising, compared to Fig. 5c, two further intra-orbital communication links for transmission of user data;
Fig. 7 is a schematic diagram of an inter-satellite communication link topology for transmission of user data in one embodiment of the invention, with $n \geq 3$ and $m \geq 4$, with, compared to Fig. 5c, a larger diagonal offset for inter-orbital communication links;
Fig. 8a is a schematic diagram of part of an inter-satellite communication link topology for transmission of user data in one embodiment of the invention, with $n \geq 6$, $m \geq 7$, and four inter-satellite links per satellite;
Fig. 8b is a schematic diagram of part of an inter-satellite communication link topology for transmission of user data in one embodiment of the invention, with four inter-satellite links per satellite and, compared to Fig. 8a, a larger diagonal offset for inter-orbital communication links;
Fig. 9 is a schematic diagram of part of an inter-satellite communication link topology for transmission of user data in one embodiment of the invention, with three inter-satellite links per satellite;
Fig. 10a is a schematic diagram of part of an inter-satellite communication link topology for transmission of user data in one embodiment of the invention;
Fig. 10b is a schematic diagram of part of an inter-satellite communication link topology for transmission of user data in one embodiment of the invention;
Fig. 11 is a schematic diagram of part of an inter-satellite communication link topology for transmission of user data in one embodiment of the invention, comprising additional communication links for transmission of user data;
Fig. 12a is a schematic diagram of part of an inter-satellite communication link topology for transmission of user data in one embodiment of the invention, with $n \geq 6$, $m \geq 7$, and four inter-satellite links per satellite;
Fig. 12b is a schematic diagram of part of an inter-satellite communication link topology for transmission of user data in one embodiment of the invention, with four inter-satellite links per satellite and, compared to Fig. 12a, a larger diagonal offset for communication links between cross-orbit rows;
Fig. 13 is a schematic diagram of part of an inter-satellite communication link topology for transmission of user data in one embodiment of the invention, with three inter-satellite links per satellite;
Fig. 14 schematically illustrates some components of a satellite in one embodiment of the invention;
Fig. 15 is a schematic diagram of an implementation of a processing device in one embodiment of the invention; and

Fig. 16 schematically illustrates a system comprising a processing device or set of processing devices for assisting in controlling inter-satellite communication links of a constellation of satellites orbiting the Earth, in one embodiment of the invention.

**[Detailed description]**

The present invention shall now be described in conjunction with specific embodiments. The specific embodiments serve to provide the skilled person with a better understanding but are not intended to in any way restrict the scope of the invention, which is defined by appended claims. In particular, the embodiments described independently throughout the description can be combined to form further embodiments to the extent that they are not mutually exclusive. A list of abbreviations and their meaning is provided at the end of the detailed description.

When the term "real-time" is used in the present document, it means that an action is performed (e.g., data is processed, results are computed) as soon as the required information for that action is available. Thus, certain latency may exist, which depends on various aspects depending on the involved component(s) of the system.

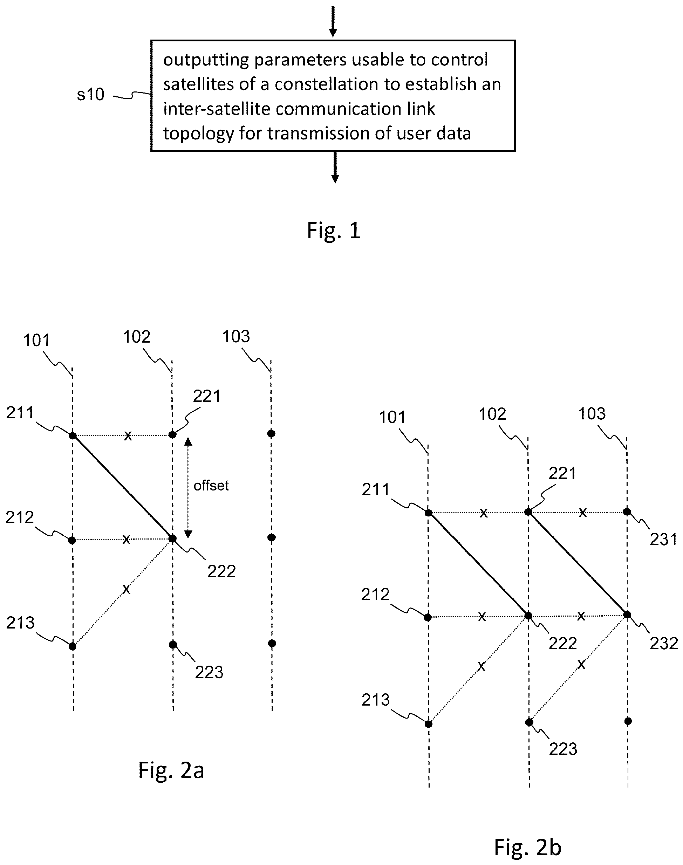

Fig. 1 is a flowchart of a method in one embodiment of the invention. The method is carried out by a processing device or by a set of processing devices. The method may be carried out by any suitable processing device or any suitable combination of processing devices, wherein a processing device may as well perform other functions than those associated with the method. A processing device may for example be a computer, a microprocessor, a microcontroller-based platform, a controller, an integrated circuit, and/or an application-specific integrated circuit (ASIC). The method may additionally comprise steps and/or operations carried out partially or fully by other suitable elements, such as an antenna for transmitting an electromagnetic signal (e.g., a command for a satellite). In the flowchart of Fig. 1, the arrow reaching box labelled "s10" means that operations may be performed prior to operation s10 or, alternatively, operation s10 may be the first operation of the method. Likewise, the arrow leaving box labelled "s10" means that operations may be performed after operation s10 or, alternatively, operation s10 may be the last operation of the method. The flowchart of Fig. 1 will be described also with reference to other figures, including Figs. 2a and 2b.

The method's aim is to assist in controlling inter-satellite communication links of a constellation of satellites orbiting the Earth. By 'assisting in controlling inter-satellite communication links of a constellation of satellites orbiting the Earth', it is meant that the method leads to outputting parameters usable to control inter-satellite communication links of the constellation. The outputted parameters need not necessarily be used for controlling inter-satellite communication links of the constellation, but they are usable therefor. In one embodiment, the method further comprises using the outputted parameters as, or for generating, commands (e.g., TT&C commands) to control the satellites to establish the inter-satellite communication link topology for transmission of user data. Establishing the inter-satellite communication link topology for transmission of user data occurs prior to routing data through the topology. That is, topology establishment and routing are separate operations. The topology establishment aims at establishing satellite interconnections for subsequent traffic routing. The topology configuration of the satellite constellation may take place repeatedly over time in case the orbits are such that the neighbouring satellites change over time.

The outputted parameters may also be used for simulation purposes. Specifically, in one embodiment, the method further comprises using the outputted parameters for simulation purposes, such as for simulating routing user data within the constellation of satellites set up according to the established topology.

By 'inter-satellite communication link', it is here meant a free-space communication link between two satellites of the constellation allowing data to be transmitted between the two satellites. In one embodiment, the inter-satellite communication links are optical communication links, radio frequency (RF) links, or a combination thereof. One topology may for example combine different types of inter-satellite communication links, with e.g. some links being optical communication links and other links being RF links. In one embodiment, the inter-satellite communication links are established for transmission of user data. This means that this does not exclude the establishment of other inter-satellite communication links for other purposes, such as for transmission of control data within the constellation, for example routing control data. In one embodiment, the inter-satellite communication links are bidirectional.

By 'constellation of satellites', it is here meant a plurality of artificial satellites and, in one embodiment, specifically a plurality of satellites that are centrally controlled and operated from the Earth, for example by means of one or a plurality of satellite operations centres and ground stations to communicate with the satellites. The constellation of satellites comprises $n$ orbital planes and $m$ satellites per orbital plane, wherein $n$ and $m$ are positive integer values, $n \neq m$, $n \geq 3$, and $m \geq 3$. The values of n and $m$ may for example be such that at least one of the following applies: (i) $n \geq 6$ and $m \geq 6$; (ii) $n \geq 6$ and $m \geq 12$; (iii) $n \geq 6$ and $m \geq 18$; (iv) $n \geq 6$ and $m \geq 24$; (v) $n \geq 8$ and $m \geq 24$; (vi) $n \geq 10$ and $m \geq 24$; (vii) $n$ times $m$ is larger than, or equal to, 50; (viii) $n$ times $m$ is larger than, or equal to, 75; (ix) $n$ times $m$ is larger than, or equal to, 100; (x) $n$ times $m$ is larger than, or equal to, 200; (xi) $n$ times $m$ is larger than, or equal to, 500; and (xii) $n$ times $m$ is larger than, or equal to, 1000.=

An orbital plane is an imaginary plane intersecting with the center of the Earth and defining a common trajectory (orbit) that a group, i.e. a sequence, of $m$ satellites take when orbiting around the Earth. In other words, an orbital plane defines an orbit followed, for example equidistantly, by a plurality of satellites in different phases. An orbital plane is generally defined by its inclination (the tilt of the orbit relative to the equatorial plane) and orientation (which defines the point where a satellite in the orbital plane crosses the equator moving from south to north). In one embodiment, the constellation of satellites orbiting the Earth is a constellation of satellites in low Earth orbit (LEO). However, in other embodiments, other types of orbits may be used, such as for example medium Earth orbit (MEO). The constellation of satellites may also comprise, in some embodiments, satellites in different orbits such as different LEO orbits. For example, satellites from low-altitude LEO orbit(s) and high-altitude LEO orbit(s) may be combined in a single constellation. That is, the orbits need not be at quasi-similar heights. Multi-orbit constellations comprising multiple altitudes may be mixed in some embodiments.

In one embodiment, the constellation of satellites orbiting the Earth is a constellation in which the orbital planes are evenly spaced around the Earth. In one embodiment, the constellation of satellites orbiting the Earth is a constellation in which, in each orbital plane, adjacent satellites are evenly spaced from each other.

In one embodiment, the constellation of satellites orbiting the Earth contains at least one additional orbital plane that contains a number of satellites differing from $m$. The topology used in relation to the additional orbital plane(s) may differ from the topology used for the orbital planes with $m$ satellites.

In one embodiment, the constellation of satellites orbiting the Earth is one of: a Walker constellation; and a constellation comprising a Walker constellation and at least one polar orbit.

In one embodiment, each satellite is a communication satellite. In one embodiment, each satellite is a communication satellite to receive data from, and to send data to, terminals and/or gateways located on or near the Earth's surface. The inter-satellite communication links therefore enable the satellites to forward user data from one satellite to another, to ultimately enable any pair of terminals and/or gateways on or near the Earth's surface to exchange data through the satellite constellation. The terminals may for example be mobile terminals, carried by users, or attached to vehicles, ships (such as cruise ships or cargo ships), aeroplanes (such as passenger airliners), or trains. In one embodiment, the constellation of satellites orbiting the Earth is for providing data communication connectivity to users on or near the Earth surface. By "near the Earth's surface", it is here meant below a threshold altitude from the Earth's surface. In one embodiment, the threshold altitude is an altitude equal to or smaller than at least one of: 10000, 12000, 15000, 20000, 25000, and 30000 meters above sea level. The terminals are located at lower altitudes than those of the satellites. The terminals may be fixed or mobile.

The satellites may for example be multibeam satellites carrying a flat-panel, electrically steered beam-forming phased array antenna, with every beam being independently steerable, shapeable, and power adjustable. Such antennas may be flexible and software controllable. In one embodiment, a multibeam satellite may not be able to activate all its beams simultaneously but may implement a time-domain beam hopping technique to allow the satellite to reach, in effect, a high or number of beams.

The method comprises outputting s10 parameters usable to control satellites of the constellation of satellites to establish an inter-satellite communication link topology for transmission of user data. In one embodiment, outputting the parameters comprises generating or selecting the parameters. An inter-satellite communication link topology is a set of inter-satellite communication links established at one point in time. In one embodiment, the inter-satellite communication links are each maintained for $p$ seconds, wherein $p$ is in the range of 30 to 600. That is, the inter-satellite communication links are allocated on relatively long-time basis, because it may not be possible to establish the inter-satellite communication links at the speed desired for the transmission of user data. In one embodiment, outputting parameters usable to control the satellites of the constellation to establish an inter-satellite communication link topology for transmission of user data takes place repeatedly over time. This is advantageous to account for the change over time of the positions of the satellites of the constellation with respect to each other. In other words, the method may be repeated over time to take the changes in location of satellites into account. The dynamic adjustment, i.e. reconfiguration, of the inter-satellite communication link topology as a result of carrying out the method may be performed in real-time and automatically, i.e. without the intervention of a human operator. The method may take as input information on the current and/or projected position of the respective satellites of the constellation.

In the inter-satellite communication link topology established in operation s10, the following applies. A subset of the satellites of the constellation is taken. Each satellite of the subset of the satellites is here referred to as "first satellite", and each first satellite is regarded as a reference satellite for describing the local properties of the topology, i.e. for describing a local motif that may be repeated at all other satellite nodes or at least at some of them. Specifically, for each satellite of at least a subset of the satellites, i.e. for each first satellite, the following applies and will be described with reference to Figs. 2a and 2b. In Figs. 2a and 2b, the dashed lines schematically represent orbital planes. Three orbital planes 101, 102, 103 are shown. The black dots are satellites, such as satellites 211, 212, 213 in orbital plane 101, satellites 221, 222, 223 in orbital plane 102, etc. The solid segments (i.e., the continuous, unbroken segments) connecting two black dots are inter-satellite communication links for transmission of user data. The dotted segments between two black dots and marked with the letter "x" show the pairs of satellites between which no inter-satellite communication link for transmission of user data is established. Furthermore, in Figs. 2a and 2b, the dots which are neither connected by a solid segment nor by a x-marked dotted segment may or may not be connected with an inter-satellite communication link for transmission of user data. Examples will be further described in other drawings, with Figs. 2a and 2b focusing on minimal local properties of the topologies.

As schematically shown in Fig. 2a, an inter-satellite communication link for transmission of user data is established between a first satellite 211 and a second satellite 222 of the constellation. First satellite 211 is in first orbital plane 101, and second satellite 222 is in second orbital plane 102 adjacent to first orbital plane 101. Further, the position of second satellite 222 in second orbital plane 102 is offset from a position of a third satellite 221 in second orbital plane 102, wherein third satellite 221 is the closest satellite to first satellite 211 among the satellites in second orbital plane 102. The offset may therefore be regarded as a shift in latitude or as a phase offset in second orbital plane 102. For the sake of simplicity, the inter-satellite communication link between first satellite 211 and second satellite 222 may sometimes be called "diagonal inter-orbital communication link" in the following.

In Fig. 2a, the schematically depicted offset is the smallest possible offset in one direction (southwards) in that there is no satellite between second satellite 222 and third satellite 221 in second orbital plane 102. In other embodiments, the offset may be larger in that there may be one, two, three, four, or more intermediate satellites between second satellite 222 and third satellite 221 in second orbital plane 102. In addition, in some embodiments, the offset is in the other direction (northwards) than the one depicted in Fig. 2a.

Further, as also schematically shown in Fig. 2a, it is refrained from establishing an inter-satellite communication link for transmission of user data between first satellite 211 and third satellite 221. In other words, the neighbour satellite in adjacent orbit 102 is skipped when establishing an inter-satellite communication link topology for transmission of user data. Not connecting with the nearest neighbour in the adjacent orbital plane is deliberate.

Note that first satellite 211 and third satellite 221 need not be at exactly the same latitude, i.e. the diagram is also schematic in this respect.

Yet furthermore, it is also refrained from establishing an inter-satellite communication link for transmission of user data between second satellite 222 and any satellite of first orbital plane 101 other than first satellite 211. That is, an inter-satellite communication links for transmission of user data is for example neither established between second satellite 222 and satellite 212 nor between second satellite 222 and satellite 213.

In this embodiment, the above-described local topology, i.e. the pattern or motif, is applied regardless of whether first satellite 211 is latitude-decreasing or latitude-increasing. That is, the topology is applied no matter whether first satellite 211 is latitude-decreasing or latitude-increasing. No discrimination is made in this respect.

Furthermore, as schematically shown in Fig. 2b, an identical inter-satellite communication link pattern as between first orbital plane 101 and second orbital plane 102 is applied between second orbital plane 102 and a third orbital plane 103 adjacent to second orbital plane 102, wherein third orbital plane 103 is different from first orbital plane 101. Here, by 'identical inter-satellite communication link pattern', it is meant that the value and sign (direction) of the above-referred offset is preserved from the pair of orbital planes { first, second } to the pair of orbital planes { second, third }.

Specifically, as schematically shown in Fig. 2b, an inter-satellite communication link for transmission of user data is also established between satellite 221 in second orbital plane 102 and satellite 232 in third orbital plane 103. The position of satellite 232 in third orbital plane 103 is offset from a position of a satellite 231 in third orbital plane 103, wherein satellite 231 is the closest satellite to satellite 221 among the satellites in third orbital plane 103. That is, the inter-satellite communication link between satellites 221 and 232 may be regarded as a diagonal inter-orbital communication link. Further, no inter-satellite communication link for transmission of user data is established between satellites 221 and 231. In other words, also here, the neighbour satellite in adjacent orbit 103 is skipped when establishing an inter-satellite communication link topology for transmission of user data. Yet furthermore, no inter-satellite communication link for transmission of user data is established between satellite 232 and any satellite of second orbital plane 102 other than satellite 221. That is, an inter-satellite communication link for transmission of user data is neither established between satellites 232 and 222 nor between satellites 232 and 223.

The above means that, in Fig. 2a, there is one reference satellite (first satellite), namely satellite 211, whereas in Fig. 2b, there are two reference satellites (first satellites), namely satellites 211 and 221. The pattern (or motif) locally defined with reference to satellite 211 is repeated with reference to satellite 221. There may be vertex-symmetry between satellites 211 and 221. The above also means that, in Fig. 2a, the subset comprises at least satellite 211, and, in Fig. 2b, the subset comprises at least satellites 211 and 221.

The pattern or motif described with reference to Figs. 2a and 2b has been found to be advantageous to reduce delays (latency) in the transmission of user data through the constellation, generally ensuring uninterrupted, continuous connections, and/or generally avoiding traffic congestion at specific nodes (i.e., at specific satellites), as will be explained further below with reference to specific embodiments. In particular, the above-described pattern or motif has been found to be advantageous in terms of average shortest path length (ASPL) between every two nodes (satellites) of the constellation, independently of any geographic distance metric. The ASPL captures the hop-based distance a packet has to travel on average through the satellite network to reach its destination assuming a shortest path routing scheme like Dijkstra's algorithm is used to choose the shortest network path. The ASPL may serve as a proxy for measuring latency since each hop along the path in the network (especially due to the processing at each satellite node) incurs delay and contributes to the latency.

In other words, the topologies are advantageous in terms of average number of satellite hops, i.e. in order to minimize the average number of satellite hops. On average in a large network of satellites, hence in particular when the above-referred pattern or motif is repeated, and assuming the end user terminals are distributed in large numbers evenly over the coverage area, it is desirable to minimise the average number of inter-satellite hops, i.e. it is desirable to minimise the ASPL. In turn, meeting this goal may allow to comply with given quality-of-service requirements for user traffic in a network.

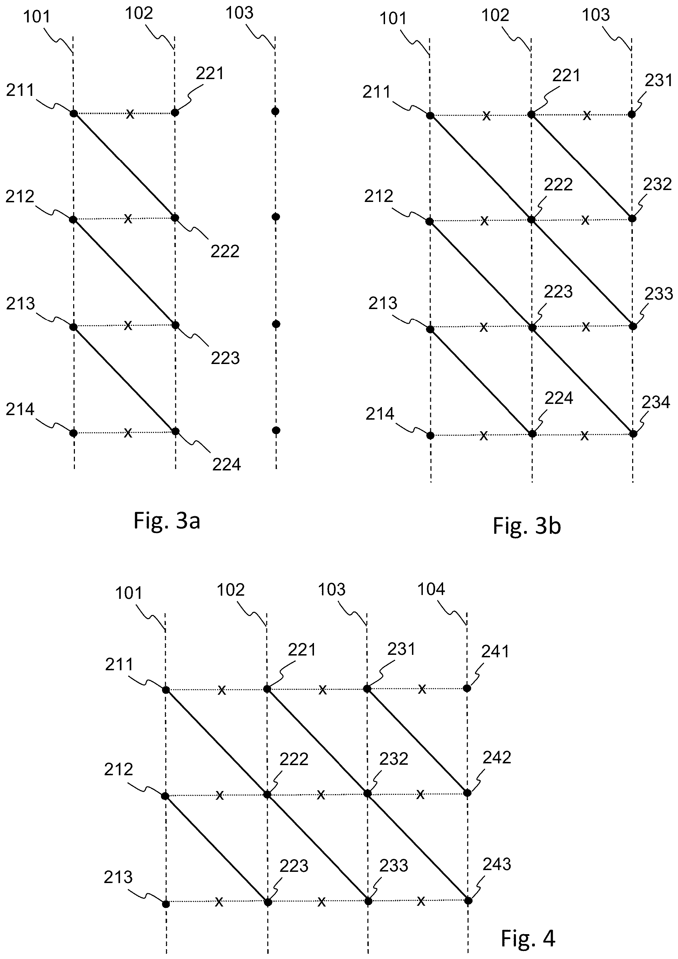

Figs. 3a and 3b schematically illustrate an embodiment which differs from the embodiment described with reference to Figs. 2a and 2b in that three satellites 211, 212, 213 are taken as reference satellites ("first satellites") in first orbital plane 101. This means that diagonal inter-orbital communication links are established between satellites 211 and 222, between satellites 212 and 223, and between satellites 213 and 224. Furthermore, as schematically shown in Fig. 3b, an identical inter-satellite communication link pattern as between first orbital plane 101 and second orbital plane 102 is applied between second orbital plane 102 and third orbital plane 103, so that diagonal inter-orbital communication links are also established between satellites 221 and 232, between satellites 222 and 233, and between satellites 223 and 234. As also shown, no inter-satellite communication link for transmission of user data is established between satellites 211 and 221, between satellites 212 and 222, between satellites 213 and 223, between satellites 214 and 224, between satellites 221 and 231, between satellites 222 and 232, between satellites 223 and 233, and between satellites 224 and 234.

The above means that, in Fig. 3b, there are at least three orbital planes, i.e. $n \geq 3$, three are at least four satellites per orbital plane, $m \geq 4$, there may be vertex-symmetry between reference satellites 211, 212, 213, 221, 222, and 223, and the above-referred subset of reference satellites comprises six satellites 211, 212, 213, 221, 222, and 223.

Another, similar pattern in one embodiment of the invention is schematically shown in Fig. 4 with at least four orbital planes, i.e. $n \geq 4$, and at least three satellites per orbital plane, $m \geq 3$. In the topology schematically illustrated in Fig. 4, diagonal inter-orbital communication links are established between satellites 211 and 222, between satellites 212 and 223, between satellites 221 and 232, between satellites 222 and 233, between satellites 231 and 242, and between satellites 232 and 243. As also shown, no inter-satellite communication link for transmission of user data is established between satellites 211 and 221, between satellites 212 and 222, between satellites 213 and 223, between satellites 221 and 231, between satellites 222 and 232, between satellites 223 and 233, between satellites 231 and 241, between satellites 232 and 242, and between satellites 233 and 243.

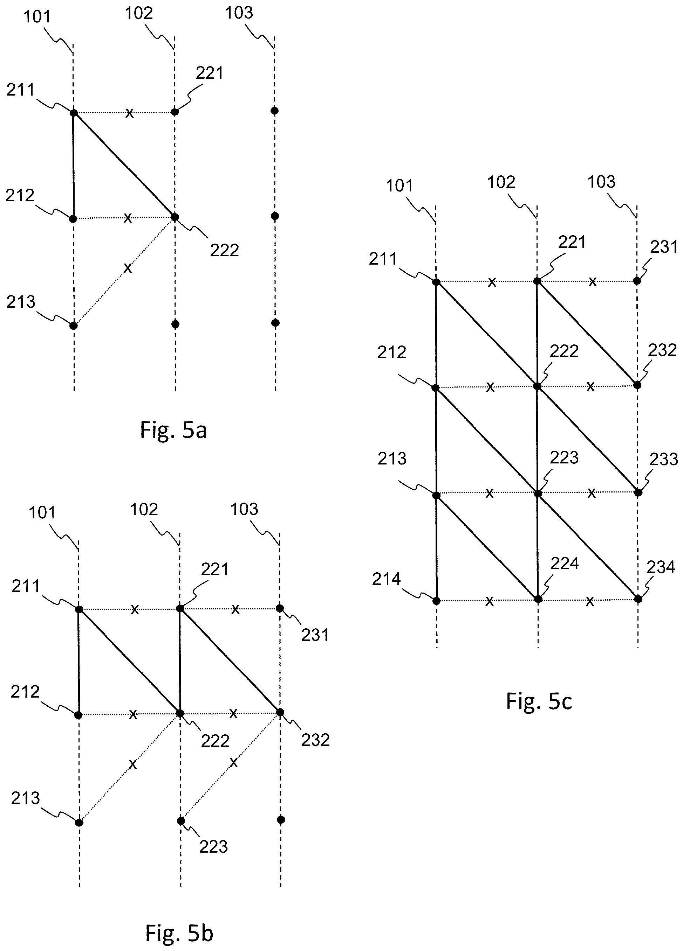

Fig. 5a schematically illustrates part of an inter-satellite communication link topology for transmission of user data in one embodiment of the invention, comprising, compared to Fig. 2a, a further intra-orbital communication link for transmission of user data. Namely, in the inter-satellite communication link topology, for reference satellite 211, a further inter-satellite communication link for transmission of user data is established between first satellite 211 and fourth satellite 212, wherein fourth satellite 212 is adjacent to first satellite 211 in first orbital plane 101.

Fig. 5b is a schematic diagram of part of an inter-satellite communication link topology for transmission of user data in one embodiment of the invention, comprising, compared to Fig. 2b, two further intra-orbital communication links for transmission of user data. That is, the pattern or motif schematically shown in Fig. 5a is identically repeated between second orbital plane 102 and third orbital plane 103, so that two further inter-satellite communication links for transmission of user data are established respectively between satellite 211 and satellite 212 and also between satellite 221 and satellite 222.

Fig. 5c is a schematic diagram of an inter-satellite communication link topology for transmission of user data in one embodiment of the invention, with $n \geq 3$ and $m \geq 4$. Compared to Fig. 3b, further intra-orbital communication links for transmission of user data are established between satellites 211 and 212, between satellites 212 and 213, between satellites 213 and 214, between satellites 221 and 222, between satellites 222 and 223, and between satellites 223 and 224. That is, six intra-orbital communication links for transmission of user data are established in the embodiment illustrated by Fig. 5c.

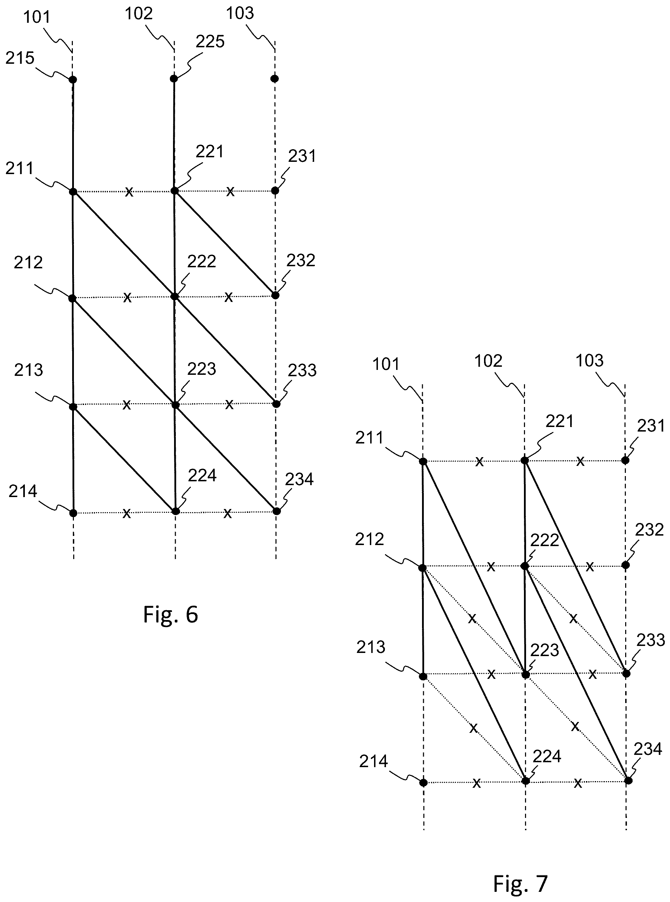

Fig. 6 is a schematic diagram of an inter-satellite communication link topology for transmission of user data in one embodiment of the invention, with $n \geq 3$ and $m \geq 5$, comprising, compared to Fig. 5c, two further intra-orbital communication links for transmission of user data. Namely, in the inter-satellite communication link topology depicted in Fig. 6, for each reference satellite ("first satellite") 211, 212, 213, and 214, a further inter-satellite communication link for transmission of user data is established, if not already existing, between the reference satellite and another satellite, hereinafter referred to as "fifth satellite", in first orbital plane 101. In Fig. 6, a further inter-satellite communication link for transmission of user data is therefore established between satellites 211 and 215, whereas links from satellite 212 to satellite 211, from satellite 213 to satellite 212, and from satellite 214 to satellite 213, are existing already. As the pattern between first orbital plane 101 and second orbital plane 102 is identically repeated between second orbital plane 102 and third orbital plane 103, this means that, as depicted, a further inter-satellite communication link for transmission of user data is established between satellite 221 and satellite 225 in second orbital plane 102.

Fig. 7 is a schematic diagram of an inter-satellite communication link topology for transmission of user data in one embodiment of the invention, with $n \geq 3$ and $m \geq 4$, with, compared to Fig. 5c, a larger diagonal offset for inter-orbital communication links. Namely, a diagonal inter-orbital communication link for transmission of user data is established between satellites 211 and 223, and there is intermediate satellite 222 between satellites 221 and 223. Likewise, a diagonal inter-orbital communication link for transmission of user data is established between satellites 212 and 224, and there is intermediate satellite 223 between satellites 222 and 224. The same pattern is repeated between second orbital plane 102 and third orbital plane 103 so that a diagonal inter-orbital communication link for transmission of user data is established between satellites 221 and 233 (and there is intermediate satellite 232 between satellites 231 and 233) and a diagonal inter-orbital communication link for transmission of user data is established between satellites 222 and 234 (and there is intermediate satellite 233 between satellites 232 and 234). In other words, for each reference satellite (in Fig. 7, satellites 211, 212, 221, and 222), the position of the second satellite (in Fig. 7, satellites 223, 224, 233, and 234, respectively) in the adjacent orbital plane is offset from the position of the third satellite (in Fig. 7, satellites 221, 222, 231, and 232, respectively) by a number $q$ of intermediate satellites between the second satellite and the third satellite, wherein $q$ is an integer value depending on $n$, m, and a number of inter-satellite communication links per satellite, and $q \geq 0$. In other words, $q$ is the number of intermediate satellites in the orbital plane under consideration. The value $q = 0$ means an offset by 1 position in the orbital plane; the value $q = 1$ means an offset of 2 positions; etc. In Fig. 7, $q = 1$, as there is one intermediate satellite, and the offset may be regarded as being an offset of two segments (i.e., for the offset illustrated in Fig. 7, $q + 1 = 2$ segments).

How for example, in some embodiments of the invention, $q$ may depend on $n$, $m$, and a number of inter-satellite communication links per satellite, will be apparent with reference to the description of further embodiments below. In some embodiments, the value of $q$ is selected so as to reflect a requirement that the larger the ratio $m$ to $n$, the larger the value $q$. Below, in relation to some embodiments, the value $k$ is also used to refer to the offset, wherein $k = q + 1$.

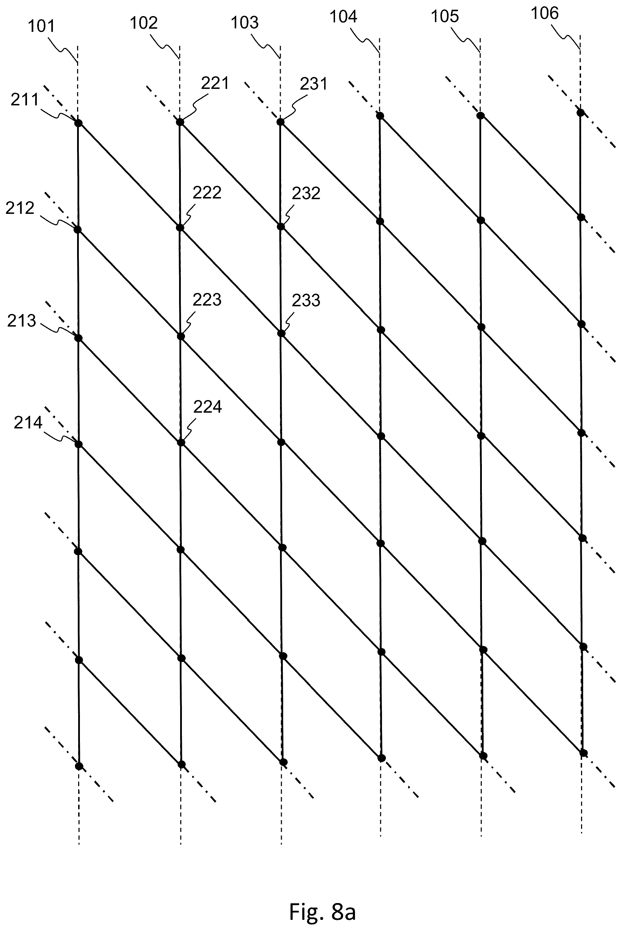

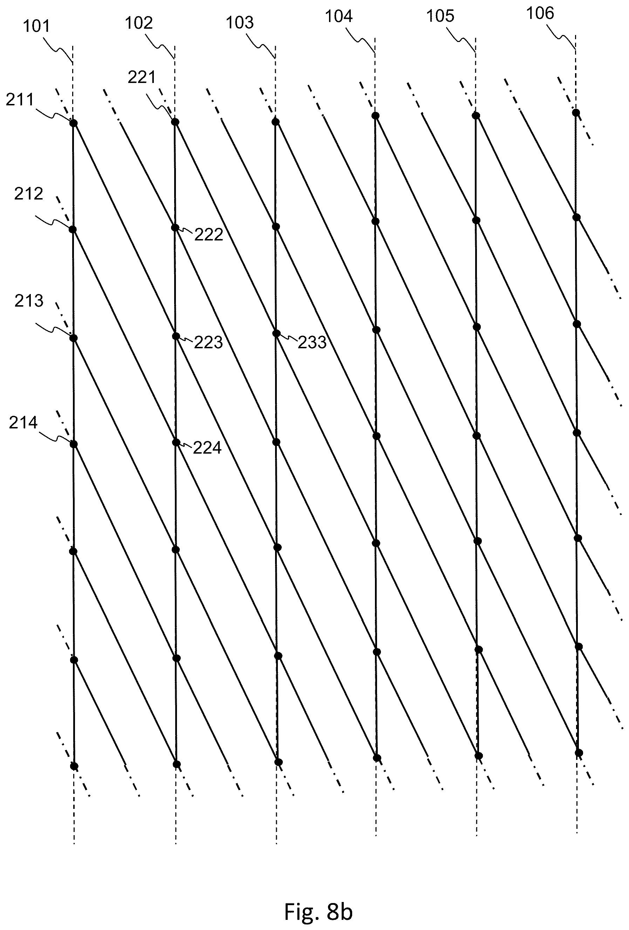

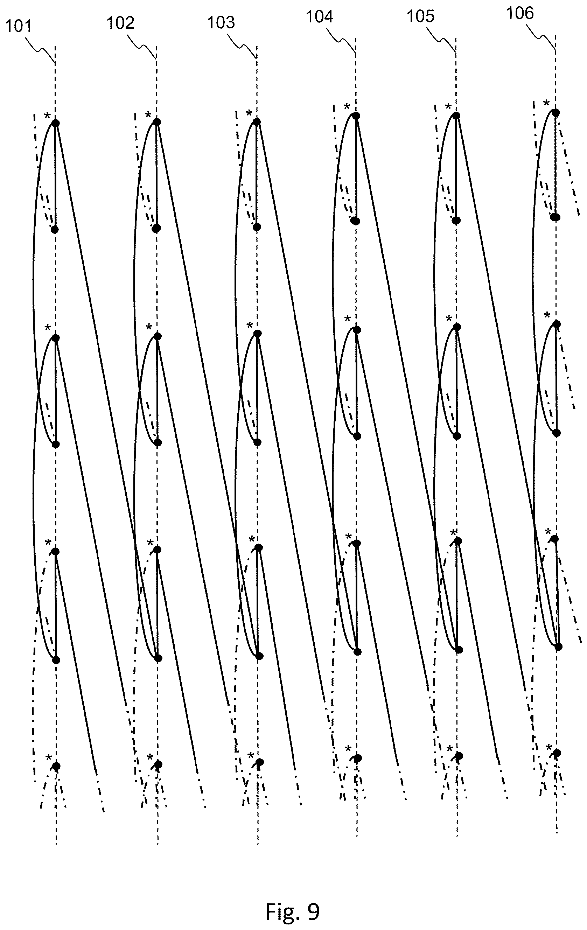

In one embodiment, the number of inter-satellite communication links per satellite is equal to 4 (see for example Figs. 8a and 8b). In another embodiment, the number of inter-satellite communication links per satellite is equal to 3 (see for example Fig. 9).

In one embodiment, the number of inter-satellite communication links per satellite is equal to 4, and the inter-satellite communication link topology is defined by a jump set $\{[1\ 0]^T, [k\ 1]^T\}$, wherein: $k$ is an integer value with

$$k = \left\lceil \sqrt{\frac{2m}{n}} - 1 \right\rceil;$$

operator $\lceil ... \rceil$ means rounding up to integer; and the jump set uses a notation wherein each pair $[a1\ a2]^T$ means, for each first satellite of the subset of the satellites, establishing an inter-satellite communication link from the first satellite to a satellite that is offset in intra-orbital-plane direction by $a1$ and in inter-orbital-plane direction by $a2$. For example, if $m = 40$ and $n = 10$, then $k = 2$; if $m = 40$ and $n = 20$, then $k = 1$; and if $m = 80$ and $n = 10$, then $k = 3$. In some embodiments, the value of $k$ is selected differently than by using the above formula but still reflects a requirement that the larger the ratio $m$ to $n$, the larger the value $k$.

In one embodiment, the number of inter-satellite communication links per satellite is equal to 4, and $m = cn$ and c is a positive integer value. The limitation $m = cn$ is a specific example where the technique meets a certain lower bound. However, other values of $m$ and $n$ may be used as well.

Fig. 8a is a schematic diagram of part of an inter-satellite communication link topology for transmission of user data in one embodiment of the invention, with $n \geq 6$, $m \geq 7$, and four inter-satellite communication links per satellite. Furthermore, the applicable jump set is $\{[1\ 0]^T, [1\ 1]^T\}$ (i.e., $k = 1$, when starting from the above-described formula).

The first vector $[1\ 0]^T$ of the jump set means that, for each reference satellite, an inter-satellite communication link for transmission of user data is established to a satellite that is offset in intra-orbital-plane direction by 1 and in inter-orbital-plane direction by 0. That is, inter-satellite communication links for transmission of user data are established, in first orbital plane 101, from satellite 211 to satellite 212, from satellite 212 to satellite 213, from satellite 213 to satellite 214, etc., in second orbital plane 102, from satellite 221 to satellite 222, from satellite 222 to satellite 223, from satellite 223 to satellite 224, etc., and the same applies for at least orbital planes 103, 104, and 105, as schematically shown in Fig. 8a.

The second vector $[1\ 1]^T$ of the jump set means that, for each reference satellite, an inter-satellite communication link for transmission of user data is established to a satellite that is offset in intra-orbital-plane direction by 1 and in inter-orbital-plane direction by 1. That is, inter-satellite communication links for transmission of user data are established from satellite 211 to satellite 222, from satellite 212 to satellite 223, from satellite 213 to satellite 224, from satellite 221 to satellite 232, from satellite 222 to satellite 233, etc., as shown in Fig. 8a.

Fig. 8b is a schematic diagram of part of an inter-satellite communication link topology for transmission of user data in one embodiment of the invention, with four inter-satellite links per satellite and, compared to Fig. 8a, a larger diagonal offset for inter-orbital communication links. Furthermore, the applicable jump set is $\{[1\ 0]^T,[2\ 1]^T\}$ (i.e., $k = 2$, when starting from the above-described formula).

The first vector $[1\ 0]^T$ of the jump set has the same meaning as already discussed with reference to Fig. 8a. The second vector $[2\ 1]^T$ of the jump set means that, for each reference satellite, an inter-satellite communication link for transmission of user data is established to a satellite that is offset in intra-orbital-plane direction by 2 and in inter-orbital-plane direction by 1. That is, inter-satellite communication links for transmission of user data are established from satellite 211 to satellite 223, from satellite 212 to satellite 224, from satellite 221 to satellite 233, etc., as shown in Fig. 8b.

The embodiments of Figs. 8a and 8b are wholly or partly vertex-symmetric in the sense the same topology configuration may be used over whole, or at least part of, the satellite constellation.

In one embodiment, the number of inter-satellite communication links per satellite is equal to 3, $m \geq 6$ and the inter-satellite communication link topology is defined by a jump set $\{[1\ 0]^T,[3\ 0]^T,[5\ 1]^T\}$, wherein the subset of satellites comprises every other satellite in at least one orbital plane (i.e., not all satellites are reference satellites in this embodiment); and the jump set uses a notation wherein each pair $[a1\ a2]^T$ means, for each first satellite of the subset of the satellites (i.e., for each reference satellite), establishing an inter-satellite communication link from the first satellite to a satellite that is offset in intra-orbital-plane direction by $a1$ and in inter-orbital-plane direction by $a2$.

In one embodiment, the number of inter-satellite communication links per satellite is equal to 3, and $m = 6n$. The limitation $m = 6n$ is a specific example where the technique meets a certain lower bound. However, other values of $m$ and $n$ may be alternatively used.

Fig. 9 is a schematic diagram of part of an inter-satellite communication link topology for transmission of user data in one embodiment of the invention, with three inter-satellite links per satellite. Furthermore, the applicable jump set is $\{[1\ 0]^T,[3\ 0]^T,[5\ 1]^T\}$. Here the vectors of the jump set represent links starting from every other satellite in each orbital plane 101, 102, 103, etc. These reference satellites are marked with the asterisk "*" in Fig.

9. That is, in Fig. 9, the subset (described for example with reference to Figs. 2a, 2b, 5a, and 5b) comprises these reference satellites that are marked with the asterisk "*". In other words, in Fig. 9, the satellites are partitioned into two equally-sized groups, which may be called partitions R and B. A translation set or jump set { e1, e2, e3 } means a satellite u from partition R is connected to 3 satellites in partition B that lie e1, e2, and e3 away from satellite u. Similarly, a satellite v from partition B is connected to 3 satellites in partition R that lie -e1, -e2, and -e3 away from v.

The first vector $[1\ 0]^T$ of the jump set means that, for each reference satellite (those marked with the asterisk "*"), an inter-satellite communication link for transmission of user data is established to a satellite that is offset in intra-orbital-plane direction by 1 and in inter-orbital-plane direction by 0.

The second vector $[3\ 0]^T$ of the jump set means that, for each reference satellite (those marked with the asterisk "*"), an inter-satellite communication link for transmission of user data is established to a satellite that is offset in intra-orbital-plane direction by 3 and in inter-orbital-plane direction by 0. The inter-satellite communication link can be established without interference with the two intermediate satellites as the orbit is circular or substantially circular (not illustrated in Fig. 9, which is a schematic diagram). Directional inter-satellite communication links as optical inter-satellite links or RF inter-satellite links with directional antennas may be used to avoid interference in undesired directions. Moreover, using re-orientable (i.e., steerable) directional antennas is desirable to be able to re-orient an inter-satellite communication link with another satellite within link range.

The third vector $[5\ 1]^T$ of the jump set means that, for each reference satellite (those marked with the asterisk "*"), an inter-satellite communication link for transmission of user data is established to a satellite that is offset in intra-orbital-plane direction by 5 and in inter-orbital-plane direction by 1. It is here assumed that the inter-satellite communication link is possible when the two satellites can see each other without obstruction, even far away.

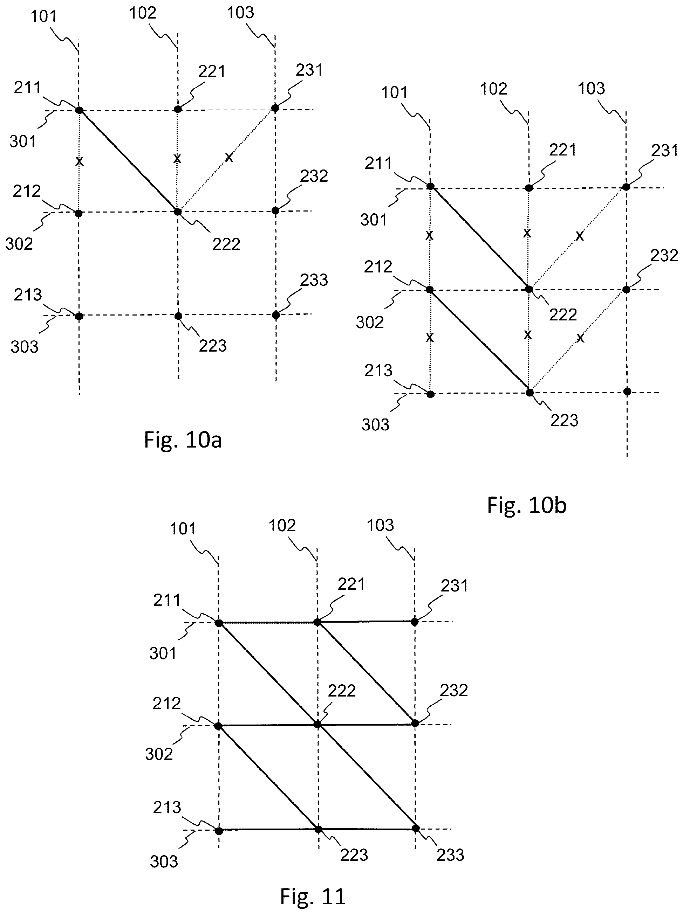

Figs. 10a to 13 schematically illustrate that all the above-described topologies can be rotated by 90 degrees to offer similar benefits and advantages in terms of reducing delays (latency) in the transmission of user data through the constellation, generally ensuring uninterrupted, continuous connections, and/or generally avoiding traffic congestion at specific nodes.

For the purpose of discussing Figs. 10a to 13, the concept of "cross-orbit row" is here defined as a group of $n$ satellites, each being in a different orbital plane and, if a satellite $S_1$ in an orbital plane $O_1$ and a satellite $S_2$ in an adjacent orbital plane $O_2$ are the closest to one another, satellites $S_1$ and $S_2$ are in the same cross-orbit row. For example, Fig. 10a shows three cross-orbit rows. First cross-orbit row 301 comprises satellites 211, 221, and 231, second cross-orbit row 302 comprises satellites 212, 222, and 232, and third cross-orbit row 303 comprises satellites 213, 223, and 233. Because satellite 211 in orbital plane 101 and satellite 221 in an adjacent orbital plane 102 are the closest to one another (in different orbital planes 101 and 102), satellites 211 and 221 are regarded as being in same cross-orbit row 301. Because satellite 221 in orbital plane 102 and satellite 231 in adjacent orbital plane 103 are the closest to one another (in different orbital planes 102 and 103), satellites 221 and 231 are also regarded as being in same cross-orbit row 301. A similar reasoning applies to the other cross-orbit rows.

With reference to Fig. 10a, the method comprises outputting s10 parameters usable to control satellites of the constellation to establish an inter-satellite communication link topology for transmission of user data, in which, for each satellite of at least a subset of the satellites (in Fig. 10a, the subset comprises satellite 211), the following applies: An inter-satellite communication link for transmission of user data is established between first satellite 211 and second satellite 222 of the constellation, wherein first satellite 211 is in first cross-orbit row 301; second satellite 222 is in second cross-orbit row 302 adjacent to first cross-orbit row 301; and the position of second satellite 222 in second cross-orbit row 302 is offset from a position of a third satellite 212 in second cross-orbit row 302, wherein third satellite 212 is closest to first satellite 211 among the satellites in second cross-orbit row 302.

Furthermore, it is refrained from establishing an inter-satellite communication link for transmission of user data between first satellite 211 and third satellite 212.

Yet furthermore, it is also refrained from establishing an inter-satellite communication link for transmission of user data between second satellite 222 and any satellite of first cross-orbit row 301 other than first satellite 211. That is, as schematically illustrated in Fig. 10a, an inter-satellite communication link for transmission of user data is neither established between satellites 222 and 221 nor between satellites 222 and 231.

As schematically illustrated by Fig. 10b, an identical inter-satellite communication link pattern or motif as between first cross-orbit row 301 and second cross-orbit row 302 is applied between second cross-orbit row 302 and third cross-orbit row 303 adjacent to second cross-orbit row 302, wherein third cross-orbit row 303 is different from first cross-orbit row 301. More specifically, an inter-satellite communication link for transmission of user data is also established between satellite 212 in second cross-orbit row 302 and satellite 223 in third cross-orbit row 303. The position of satellite 223 in third cross-orbit row 303 is offset from a position of a satellite 213 in third cross-orbit row 303, wherein satellite 213 is the closest satellite to satellite 212 among the satellites in third cross-orbit row 303. That is, the inter-satellite communication link between satellites 212 and 223 is a diagonal communication link between two cross-orbit rows. Fig. 10b also shows where no inter-satellite communication link for transmission of user data is established.

In one embodiment, the topology features described with reference to Figs. 10a and 10b for each first satellite apply regardless of whether the first satellite is latitude-decreasing or latitude-increasing. However, this is optional when it comes to the embodiments described with reference to Fig. 10a to 13. That is, the above-described topology may be applied only to latitude-decreasing satellites, only to latitude-increasing satellites, or to both latitude-decreasing and latitude-increasing satellites.

Fig. 11 is a schematic diagram of part of an inter-satellite communication link topology for transmission of user data in one embodiment of the invention, comprising, four diagonal inter-satellite communication links between cross-orbit rows, i.e. between satellites 211 and 222, between satellites 221 and 232, between satellites 212 and 223, and between satellites 222 and 233, and six inter-orbital communication links for transmission of user data, i.e. between satellites 211 and 221, between satellites 221 and 231, etc. as shown in Fig. 11.

In one embodiment, in the inter-satellite communication link topology as described above, for each reference satellite ("first satellite"), yet a further inter-satellite communication link for transmission of user data is established, if not existing already, between the first satellite and another satellite ("fifth satellite") in the first cross-orbit row.

In one embodiment, in the inter-satellite communication link topology as described above, for each reference satellite ("first satellite"), the position of the second satellite in the second cross-orbit row is offset from the position of the third satellite by a number $q$ of satellites between the second satellite and the third satellite, wherein $q$ is an integer value depending on $n, m$, and a number of inter-satellite communication links per satellite, and $q \geq 0$. How for example, in some embodiments of the invention, $q$ may depend on $n, m,$ and a number of inter-satellite communication links per satellite, will be apparent with reference to the description below. In some embodiments, the value of $q$ is selected so as to reflect a requirement that the larger the ratio $n$ to $m,$ the larger the value $q.$

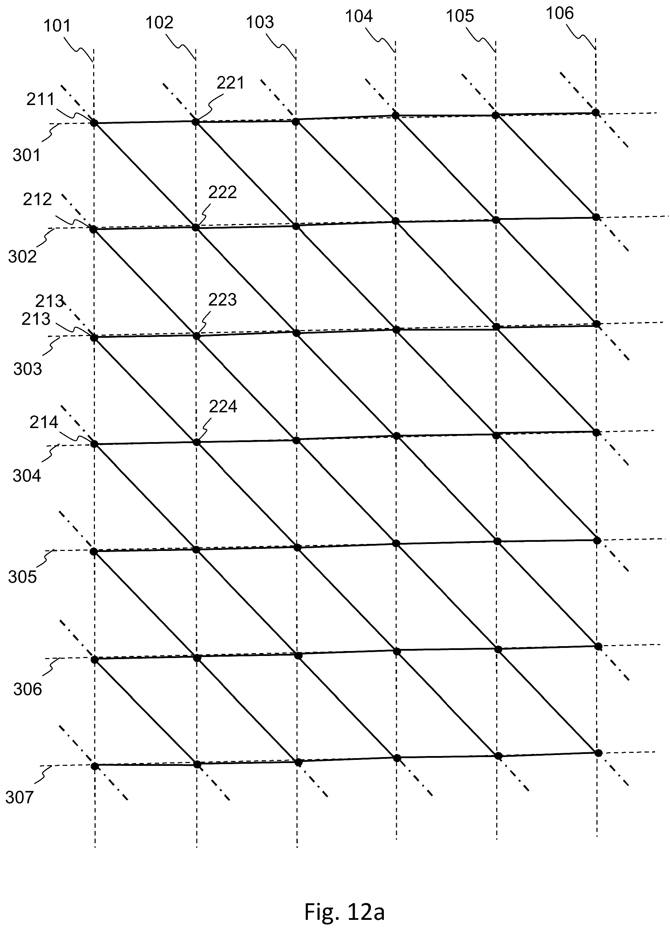

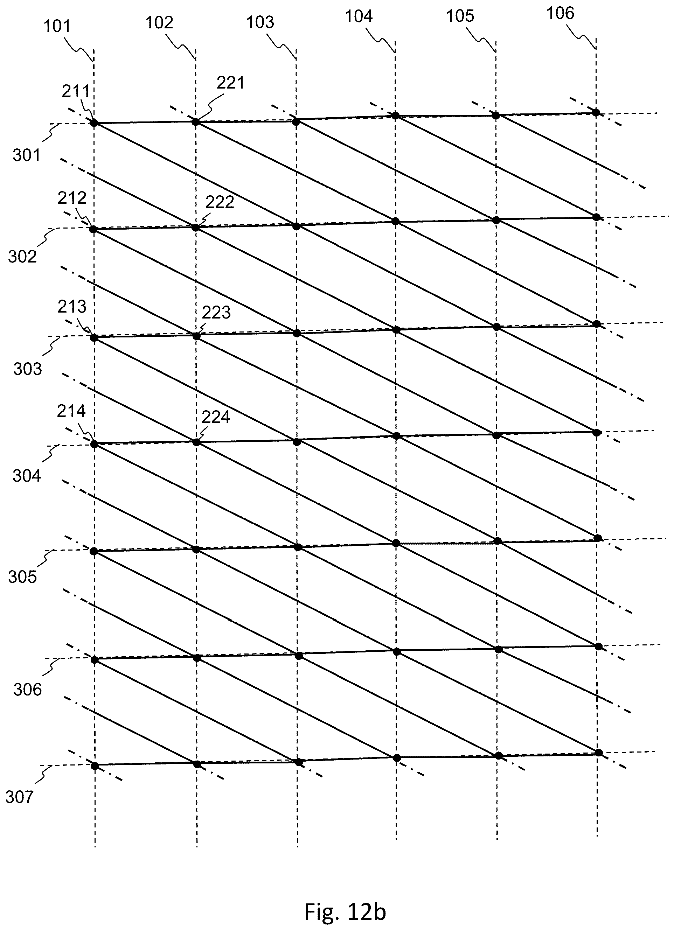

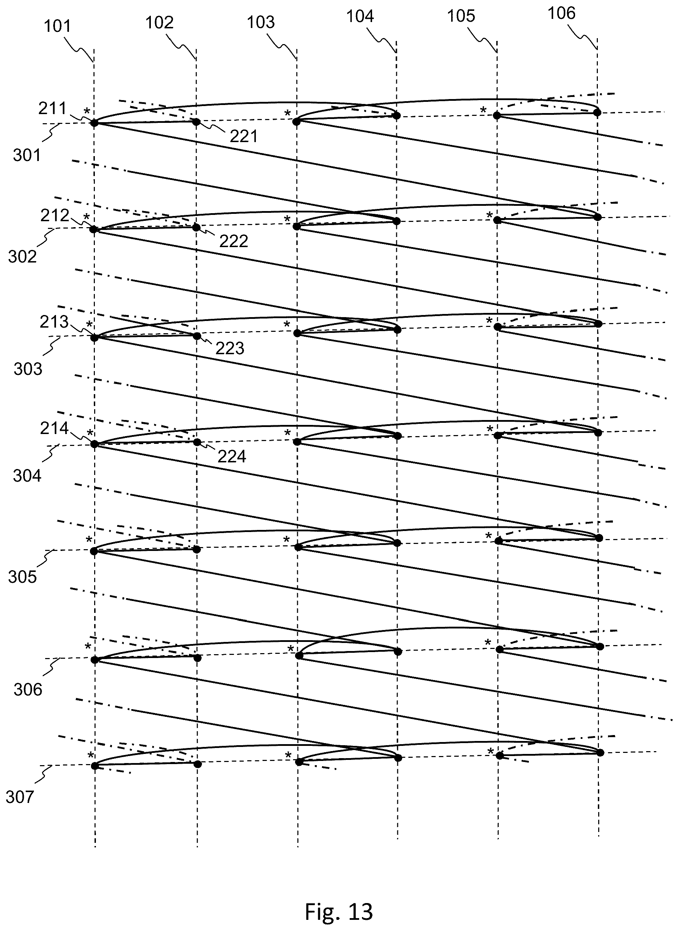

In one embodiment, the number of inter-satellite communication links per satellite is equal to 4 (see for example Figs. 12a and 12b). In another embodiment, the number of inter-satellite communication links per satellite is equal to 3 (see for example Fig. 13).

In one embodiment, the number of inter-satellite communication links per satellite is equal to 4, and the inter-satellite communication link topology is defined by a jump set $\{[0\ 1]^T, [1\ k]^T\}$, wherein $k$ is an integer value with

$$k = \left\lceil \sqrt{\frac{2n}{m}} - 1 \right\rceil;$$

operator $\lceil ... \rceil$ means rounding up to integer; and the jump set uses a notation wherein each pair $[a1\ a2]^T$ means, for each first satellite of the subset of the satellites, establishing an inter-satellite communication link from the first satellite to a satellite that is offset in intra-orbital-plane direction by $a1$ and in inter-orbital-plane direction by $a2$. In some embodiments, the value of $k$ is selected differently than by using the above formula but still reflects a requirement that the larger the ratio $n$ to $m$, the larger the value $k$.

In one embodiment, the number of inter-satellite communication links per satellite is equal to 4, and $n = cm$ and c is a positive integer value. However, other values of $m$ and $n$ may be used as well.

Fig. 12a is a schematic diagram of part of an inter-satellite communication link topology for transmission of user data in one embodiment of the invention, with $n \geq 6$, $m \geq 7$, and four inter-satellite communication links per satellite. Further, the applicable jump set is $\{[0\ 1]^T,[1\ 1]^T\}$ (i.e., $k = 1$ starting from the above-referred formula). The topology of Fig. 12a corresponds to that of Fig. 8a after a 90-degree rotation.

Fig. 12b is a schematic diagram of part of an inter-satellite communication link topology for transmission of user data in one embodiment of the invention, with four inter-satellite links per satellite and, compared to Fig. 12a, a larger diagonal offset for communication links between cross-orbit rows. The applicable jump set is $\{[0\ 1]^T,[1\ 2]^T\}$ (i.e., $k = 2$ starting from the above-referred formula). The topology of Fig. 12b corresponds to that of Fig. 8b after a 90-degree rotation.

In one embodiment, the number of inter-satellite communication links per satellite is equal to 3, $n \geq 6$, and the inter-satellite communication link topology is defined by a jump set $\{[0\ 1]^T,[0\ 3]^T,[1\ 5]^T\}$, wherein the subset of satellites comprises every other satellite in at least one cross-orbit row (i.e., not all satellites are reference satellites in this embodiment); and the jump set uses again a notation wherein each pair $[a1\ a2]^T$ means, for each first satellite of the subset of the satellites, establishing an inter-satellite communication link from the satellite to a satellite that is offset in intra-orbital-plane direction by $a1$ and in inter-orbital-plane direction by $a2$.

In one embodiment, the number of inter-satellite communication links per satellite is equal to 3, and wherein $n = 6m$. The limitation $n = 6m$ is a specific example where the technique meets a certain lower bound. However, other values of $m$ and $n$ may be used as well.

Fig. 13 is a schematic diagram of part of an inter-satellite communication link topology for transmission of user data in one embodiment of the invention, with three inter-satellite links per satellite. Further, the applicable jump set is $\{[0\ 1]^T,[0\ 3]^T,[1\ 5]^T\}$. Here the vectors of the jump set represent links starting from every other satellite in each cross-orbit row 301, 302, 303, etc. These reference satellites are those marked with the asterisk "*" in Fig. 13. That is, in Fig. 13, the subset described with reference to Figs. 10a, 10b, and 11 comprises these reference satellites that are marked with the asterisk "*". The topology of Fig. 13 corresponds to that of Fig. 9 after a 90-degree rotation.

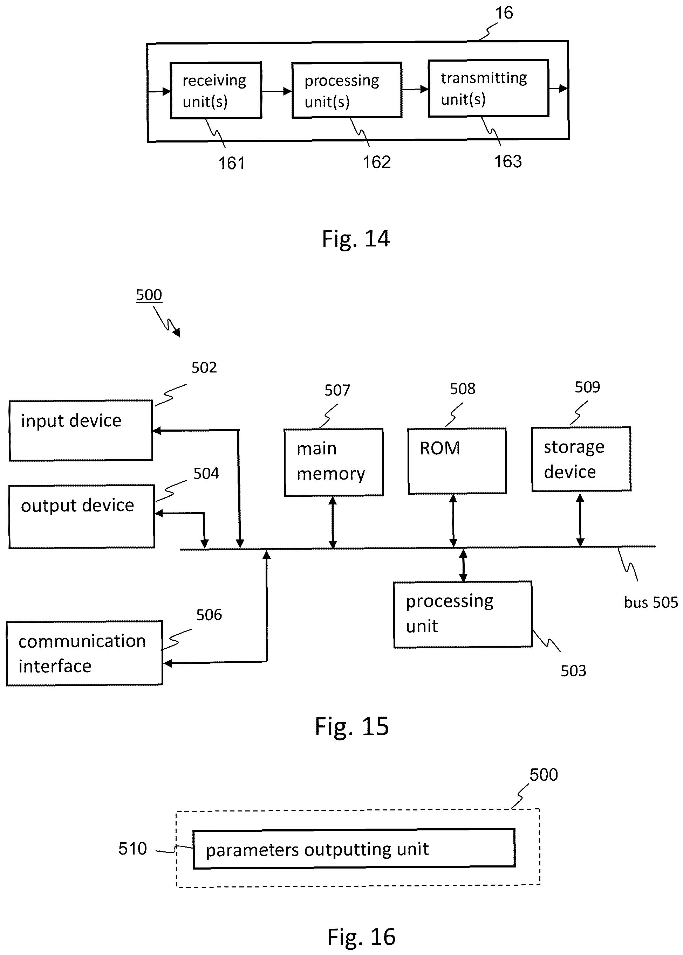

Fig. 14 schematically illustrates some components of a satellite 16 in one embodiment of the invention, which may be used in a constellation such as one schematically illustrated (or partially illustrated) in any one of Figs. 2a to 13. Satellite 16 may be configured for enabling communication with (i.e., from and to) gateway(s) and/or end user terminal(s) located on Earth or near the Earth's surface (not illustrated in Fig. 14), and with some other satellites (not illustrated in Fig. 14) of the constellation. Satellite 16 comprises receiving unit(s) 161, processing unit(s) 162, and transmitting(s) unit 163. Receiving unit(s) 161 is configured for receiving uplink signals from gateway(s) and/or terminals over uplink channel(s), and for receiving signals from some other satellites of the constellation. Processing unit(s) 162 is configured for processing the received signals to derive therefrom signals to be transmitted. Besides, transmitting unit(s) 163 is configured for transmitting downlink signals towards Earth 14 and/or for forwarding signals to some other satellites of the constellation. Purely for spatial efficiency in the diagram, the antenna(s) and/or optical transceiver, receivers and/or transmitters are not illustrated in Fig. 14. Satellite 16 is configured so that, and in particular receiving unit(s) 161, processing unit(s) 162, and transmitting unit(s) 163 are configured so that, in operation, upon receiving commands to that effect, they may participate in establishing an inter-satellite communication link topology for transmission of user data, as described with reference to Figs. 2a to 13.

Fig. 15 is a schematic diagram of an example of an implementation of a processing device 500 that may be used in embodiments of the invention. Namely, processing device 500, such as one as schematically illustrated by Fig. 16, may be implemented using elements such as schematically illustrated by Fig. 15.

Namely, processing device 500 may include a bus 505, a processing unit 503, a main memory 507, a ROM 508, a storage device 509, an input device 502, an output device 504, and a communication interface 506. Bus 505 may include a path that permits communication among the components of processing device 500.

Processing unit 503 may include a processor, a microprocessor, or processing logic that may interpret and execute instructions. Main memory 507 may include a RAM or another type of dynamic storage device that may store information and instructions for execution by processing unit 503. ROM 508 may include a ROM device or another type of static storage device that may store static information and instructions for use by processing unit 503. Storage device 509 may include a magnetic and/or optical recording medium and its corresponding drive.

Input device 502 may include a mechanism that permits a user to input information to processing device 500, such as a keypad, a keyboard, a mouse, a pen, voice recognition and/or biometric mechanisms, etc. Output device 504 may include a mechanism that outputs information to the user, including a display, a printer, a speaker, etc. Communication interface 506 may include any transceiver-like mechanism, or receiver and transmitter, that enables processing device 500 to communicate with other devices and/or systems (such as with a satellite in order to establish an inter-satellite communication link topology for transmission of user data). For example, communication interface 506 may include mechanisms for communicating with another device or system via a telecommunication network, optical channels, and/or RF channels.

Processing device 500 may perform certain operations or processes described herein. These operations may be performed in response to processing unit 503 executing machine-readable instructions contained in a computer-readable medium, such as main memory 507, ROM 508, and/or storage device 509. A computer-readable medium may be defined as a physical or a logical memory device. For example, a logical memory device may include memory space within a single physical memory device or distributed across multiple physical memory devices. Each of main memory 507, ROM 508 and storage device 509 may include computer-readable media. The magnetic and/or optical recording media (e.g., readable CDs or DVDs) of storage device 509 may also include computer-readable media. The machine-readable instructions may be read into main memory 507 from another computer-readable medium, such as storage device 509, or from another device via communication interface 506.

The machine-readable instructions contained in main memory 509 may cause processing unit 503 to perform operations or processes described herein, such as operation s10 as described with reference to Fig. 1. Alternatively, hardwired circuitry may be used in place of or in combination with machine-readable instructions to implement processes and/or operations described herein. Thus, implementations described herein are not limited to any specific combination of hardware and software.

Fig. 16 schematically illustrates a system comprising a processing device 500 or set of processing devices for assisting in controlling inter-satellite communication links of a constellation of satellites orbiting the Earth. Specifically, processing device 500 comprises a parameters outputting unit 510 for performing operation s10 as described with reference to Fig. 1.

Where the terms "receiving unit" 161, "processing unit" 162, "transmitting unit" 163, "parameters outputting unit" 500, and the like are used herewith, no restriction is made regarding how distributed these elements may be and regarding how gathered elements may be. That is, the constituent elements thereof may be distributed in different software or hardware components or devices for bringing about the intended function.

A plurality of distinct elements may also be gathered for providing the intended functionalities.

Any one of the above-referred elements or functions of a processing device, a gateway, a satellite, or a terminal may be implemented in hardware, software, machine-readable instructions, field-programmable gate array (FPGA), application-specific integrated circuit (ASIC), and/or firmware, or the like.

In further embodiments of the invention, any one of the above-mentioned receiving unit 161, processing unit 162, transmitting unit 163, parameters outputting unit 500, and the like is replaced by receiving means 161, processing means 162, transmitting means 163, parameters outputting means 522, and the like respectively, or, by a receiver 161, processor 162, transmitter 163, parameters outputter 522, etc. for performing the functions of the above-mentioned receiving unit 161, processing unit 162, transmitting unit 163, parameters outputting unit 522, and the like.

In further embodiments of the invention, any one of the above-described operations or processes may be implemented using computer-executable instructions, for example in the form of computer-executable procedures, methods or the like, in any type of computer languages, and/or in the form of embedded software on firmware, integrated circuits or the like.

The invention also relates to the following embodiments numbered E1 to E50:

E1. Method, carried out by a processing device or a set of processing devices, for assisting in controlling inter-satellite communication links of a constellation of satellites orbiting the Earth, the constellation comprising $n$ orbital planes and $m$ satellites per orbital plane, wherein $n$ and $m$ are positive integer values, $n \neq m$, $n \geq 3$, and $m \geq 3$, the method comprising:

outputting (s10) parameters usable to control satellites of the constellation to establish an inter-satellite communication link topology for transmission of user data, in which, for each satellite of at least a subset of the satellites, an inter-satellite communication link for transmission of user data is established between the satellite, hereinafter referred to as "first satellite", and a second satellite of the constellation, wherein

the first satellite is in a first orbital plane; the second satellite is in a second orbital plane adjacent to the first orbital plane; and the position of the second satellite in the second orbital plane is offset from a position of a satellite, hereinafter referred to as "third satellite", in the second orbital plane, the third satellite being closest to the first satellite among the satellites in the second orbital plane;

it is refrained from establishing an inter-satellite communication link for transmission of user data between the first satellite and the third satellite; it is refrained from establishing an inter-satellite communication link for transmission of user data between the second satellite and any satellite of the first orbital plane other than the first satellite; and

the above applies regardless of whether the first satellite is latitude-decreasing or latitude-increasing; and

in which an identical inter-satellite communication link pattern as between the first orbital plane and the second orbital plane is applied between the second orbital plane and a third orbital plane adjacent to the second orbital plane, the third orbital plane being different from the first orbital plane.

E2. Method of embodiment E1, wherein, in the inter-satellite communication link topology, for each first satellite, a further inter-satellite communication link for transmission of user data is established between the first satellite and a satellite, hereinafter referred to as "fourth satellite", that is adjacent to the first satellite in the first orbital plane.

E3. Method of embodiment E2, wherein, in the inter-satellite communication link topology, for each first satellite, yet a further inter-satellite communication link for transmission of user data is established, if not existing already, between the first satellite and a satellite, hereinafter referred to as "fifth satellite", in the first orbital plane.

E4. Method according to any one of embodiments E1 to E3, wherein, in the inter-satellite communication link topology, for each first satellite, the position of the second satellite in the second orbital plane is offset from the position of the third satellite by a number $q$ of satellites between the second satellite and the third satellite, wherein $q$ is an integer value depending on $n$, $m$, and a number of inter-satellite communication links per satellite, and $q \geq 0$.

E5. Method according to any one of embodiments E1 to E4, wherein the number of inter-satellite communication links per satellite is equal to 4.

E6. Method of embodiment E5, wherein the inter-satellite communication link topology is defined by a jump set $\{[1\ 0]^T, [k\ 1]^T\}$, wherein

$k$ is an integer value with $k = \left\lceil \sqrt{\dfrac{2m}{n}} - 1 \right\rceil$;

operator $\lceil \dots \rceil$ means rounding up to integer;

and
the jump set uses a notation wherein each pair $[a1\ a2]^T$ means, for each first satellite of the subset of the satellites, establishing an inter-satellite communication link from the first satellite to a satellite that is offset in intra-orbital-plane direction by $a1$ and in inter-orbital-plane direction by $a2$.

E7. Method of embodiment E5 or E6, wherein $m = cn$ and $c$ is a positive integer value.

E8. Method according to any one of embodiments E1 to E4, wherein the number of inter-satellite communication links per satellite is equal to 3.

E9. Method of embodiment E8, wherein $m \geq 6$ and the inter-satellite communication link topology is defined by a jump set $\{[1\ 0]^T, [3\ 0]^T, [5\ 1]^T\}$, wherein

the subset of satellites comprises every other satellite in at least one orbital plane; and the jump set uses a notation wherein each pair $[a1\ a2]^T$ means, for each first satellite of the subset of the satellites, establishing an inter-satellite communication link from the first satellite to a satellite that is offset in intra-orbital-plane direction by $a1$ and in inter-orbital-plane direction by $a2$.

E10. Method of embodiment E8 or E9, wherein $m = 6n$.

E11. Method according to any one of embodiments E1 to E9, wherein at least one of the following applies:

(i) $n \geq 6$ and $m \geq 6$;
(ii) $n \geq 6$ and $m \geq 12$;
(iii) $n \geq 6$ and $m \geq 18$;
(iv) $n \geq 6$ and $m \geq 24$;
(v) $n \geq 8$ and $m \geq 24$;
(vi) $n \geq 10$ and $m \geq 24$;
(vii) $n$ times $m$ is larger than, or equal to, 50;
(viii) $n$ times $m$ is larger than, or equal to, 75;
(ix) $n$ times $m$ is larger than, or equal to, 100;
(x) $n$ times $m$ is larger than, or equal to, 200;
(xi) $n$ times $m$ is larger than, or equal to, 500; and
(xii) $n$ times $m$ is larger than, or equal to, 1000.

E12. Method according to any one of embodiments E1 to E11, wherein the inter-satellite communication links are at least one of: optical communication links and radio frequency links.

E13. Method according to any one of embodiments E1 to E12, wherein the inter-satellite communication links are each maintained for $p$ seconds, wherein $p$ is in the range of 30 to 600.

E14. Method according to any one of embodiments E1 to E13, wherein outputting parameters usable to control the satellites of the constellation to establish an inter-satellite communication link topology for transmission of user data takes place repeatedly over time.

E15. Method according to any one of embodiments E1 to E14, wherein the constellation of satellites orbiting the Earth is a constellation of satellites in low Earth orbit.

E16. Method according to any one of embodiments E1 to E15, wherein the constellation of satellites orbiting the Earth is a constellation in which the orbital planes are evenly spaced around the Earth.

E17. Method according to any one of embodiments E1 to E16, wherein the constellation of satellites orbiting the Earth is a constellation in which, in each orbital plane, adjacent satellites are evenly spaced from each other.

E18. Method according to any one of embodiments E1 to E17, wherein the constellation of satellites orbiting the Earth contains at least one additional orbital plane that contains a number of satellites differing from $m$.

E19. Method according to any one of embodiments E1 to E17, wherein the constellation of satellites orbiting the Earth is one of:

a Walker constellation; and
a constellation comprising a Walker constellation and at least one polar orbit.

E20. Method according to any one of embodiments E1 to E19, wherein the constellation of satellites orbiting the Earth is for providing data communication connectivity to users on or near the Earth surface.

E21. Method according to any one of embodiments E1 to E20, further comprising using the outputted parameters as, or for generating, commands to control the satellites to establish the inter-satellite communication link topology for transmission of user data.

E22. Method according to any one of embodiments E1 to E21, further comprising using the outputted parameters for simulation purposes, such as for simulating routing user data within the constellation of satellites.

E23. Method, carried out by a processing device or a set of processing devices, for assisting in controlling inter-satellite communication links of a constellation of satellites orbiting the Earth, the constellation comprising $n$ orbital planes and $m$ satellites per orbital plane, wherein n and m are positive integer values, $n \neq m$, $n \geq 3$, and $m \geq 3$, and wherein a cross-orbit row is here defined as a group of n satellites, each being in a different orbital plane and, if a satellite $S_1$ in an orbital plane $O_1$ and a satellite $S_2$ in an adjacent orbital plane $O_2$ are the closest to one another, satellite $S_1$ and satellite $S_2$ are in the same cross-orbit row, the method comprising:

outputting (s10) parameters usable to control satellites of the constellation to establish an inter-satellite communication link topology for transmission of user data, in which, for each satellite of at least a subset of the satellites,

an inter-satellite communication link for transmission of user data is established between the satellite, hereinafter referred to as "first satellite", and a second satellite of the constellation, wherein

the first satellite is in a first cross-orbit row;
the second satellite is in a second cross-orbit row adjacent to the first cross-orbit row; and
the position of the second satellite in the second cross-orbit row is offset from a position of a satellite, hereinafter referred to as "third satellite", in the second cross-orbit row, the third satellite being closest to the first satellite among the satellites in the second cross-orbit row;

it is refrained from establishing an inter-satellite communication link for transmission of user data between the first satellite and the third satellite; and
it is refrained from establishing an inter-satellite communication link for transmission of user data between the second satellite and
any satellite of the first cross-orbit row other than the first satellite; and

in which an identical inter-satellite communication link pattern as between the first cross-orbit row and the second cross-orbit row is applied between the second cross-orbit row and a third cross-orbit row adjacent to the second cross-orbit row, the third cross-orbit row being different from the first cross-orbit row.

E24. Method of embodiment E23, wherein the topology features defined in embodiment E23 for each first satellite apply regardless of whether the first satellite is latitude-decreasing or latitude-increasing.

E25. Method of embodiment E23 or E24, wherein, in the inter-satellite communication link topology, for each first satellite, a further inter-satellite communication link for transmission of user data is established between the first satellite and a satellite, hereinafter referred to as "fourth satellite", that is adjacent to the first satellite in the first cross-orbit row.

E26. Method of embodiment E25, wherein, in the inter-satellite communication link topology, for each first satellite, yet a further inter-satellite communication link for transmission of user data is established, if not existing already, between the first satellite and a satellite, hereinafter referred to as "fifth satellite", in the first cross-orbit row.

E27. Method according to any one of embodiments E23 to E26, wherein, in the inter-satellite communication link topology, for each first satellite, the position of the second satellite in the second cross-orbit row is offset from the position of the third satellite by a number $q$ of satellites between the second satellite and the third satellite, wherein q is an integer value depending on $n$, m, and a number of inter-satellite communication links per satellite, and $q \geq 0$.

E28. Method according to any one of embodiments E23 to E27, wherein the number of inter-satellite communication links per satellite is equal to 4.

E29. Method of embodiment E28, wherein the inter-satellite communication link topology is defined by a jump set $\{[0\ 1]^T,[1\ k]^T\}$, wherein

$k$ is an integer value with $k = \left\lceil \sqrt{\dfrac{2n}{m}} - 1 \right\rceil$;

operator $\lceil ... \rceil$ means rounding up to integer; and

the jump set uses a notation wherein each pair $[a1\ a2]^T$ means, for each first satellite of the subset of the satellites, establishing an inter-satellite communication link from the first satellite to a satellite that is offset in intra-orbital-plane direction by $a1$ and in inter-orbital-plane direction by $a2$.

E30. Method of embodiment E28 or E29, wherein $n = cm$ and $c$ is a positive integer value.

E31. Method according to any one of embodiments E23 to E27, wherein the number of inter-satellite communication links per satellite is equal to 3.

E32. Method of embodiment E31, wherein $n \geq 6$ and the inter-satellite communication link topology is defined by a jump set $\{[0\ 1]^T,[0\ 3]^T,[1\ 5]^T\}$, wherein

the subset of satellites comprises every other satellite in at least one cross-orbit row; and
the jump set uses a notation wherein each pair $[a1\ a2]^T$ means, for each first satellite of the subset of the satellites, establishing an inter-satellite communication link from the satellite to a satellite that is offset in intra-orbital-plane direction by $a1$ and in inter-orbital-plane direction by $a2$.

E33. Method of embodiment E31 or E32, wherein $n = 6m$.

E34. Method according to any one of embodiments E23 to E32, wherein at least one of the following applies:

(i) n ≥ 6 and m ≥ 6;
(ii) n ≥ 6 and m ≥ 12;
(iii) n ≥ 6 and m ≥ 18;
(iv) n ≥ 6 and m ≥ 24;
(v) n ≥ 8 and m ≥ 24;
(vi) n ≥ 10 and m ≥ 24;
(vii) n times m is larger than, or equal to, 50;
(viii) n times m is larger than, or equal to, 75;
(ix) n times m is larger than, or equal to, 100;
(x) n times m is larger than, or equal to, 200;
(xi) n times m is larger than, or equal to, 500; and
(xii) n times m is larger than, or equal to, 1000.

E35. Method according to any one of embodiments E23 to E34, wherein the inter-satellite communication links are at least one of: optical communication links and radio frequency links.

E36. Method according to any one of embodiments E23 to E35, wherein the inter-satellite communication links are each maintained for $p$ seconds, wherein $p$ is in the range of 30 to 600.

E37. Method according to any one of embodiments E23 to E36, wherein outputting parameters usable to control the satellites of the constellation to establish an inter-satellite communication link topology for transmission of user data takes place repeatedly over time.

E38. Method according to any one of embodiments E23 to E37, wherein the constellation of satellites orbiting the Earth is a constellation of satellites in low Earth orbit.

E39. Method according to any one of embodiments E23 to E38, wherein the constellation of satellites orbiting the Earth is a constellation in which the orbital planes are evenly spaced around the Earth.

E40. Method according to any one of embodiments E23 to E39, wherein the constellation of satellites orbiting the Earth is a constellation in which, in each orbital plane, adjacent satellites are evenly spaced from each other.

E41. Method according to any one of embodiments E23 to E40, wherein the constellation of satellites orbiting the Earth contains at least one additional orbital plane that contains a number of satellites differing from $m$.

E42. Method according to any one of embodiments E23 to E40, wherein the constellation of satellites orbiting the Earth is one of:

a Walker constellation; and
a constellation comprising a Walker constellation and at least one polar orbit.

E43. Method according to any one of embodiments E23 to E42, wherein the constellation of satellites orbiting the Earth is for providing data communication connectivity to users on or near the Earth surface.

E44. Method according to any one of embodiments E23 to E43, further comprising using the outputted parameters as, or for generating, commands to control the satellites to establish the inter-satellite communication link topology for transmission of user data.

E45. Method according to any one of embodiments E23 to E44, further comprising using the outputted parameters for simulation purposes, such as for simulating routing user data within the constellation of satellites.

E46. System comprising a plurality of satellites forming an inter-satellite communication link topology established with a method according to any one of embodiments E1 to E45.

E47. System for assisting in controlling inter-satellite communication links of a constellation of satellites orbiting the Earth, the constellation comprising $n$ orbital planes and $m$ satellites per orbital plane, wherein $n$ and $m$ are positive integer values, $n \neq m$, $n \geq 3$, and $m \geq 3$, the system comprising a processing device or set of processing devices, and the system being configured for:

outputting (s10) parameters usable to control satellites of the constellation to establish an inter-satellite communication link topology for transmission of user data, in which, for each satellite of at least a subset of the satellites,

an inter-satellite communication link for transmission of user data is established between the satellite, hereinafter referred to as "first satellite", and a second satellite of the constellation, wherein

the first satellite is in a first orbital plane;
the second satellite is in a second orbital plane adjacent to the first orbital plane; and
the position of the second satellite in the second orbital plane is offset from a position of a satellite, hereinafter referred to as "third satellite", in the second orbital plane, the third satellite being closest to the first satellite among the satellites in the second orbital plane;

it is refrained from establishing an inter-satellite communication link for transmission of user data between the first satellite and the third satellite;
it is refrained from establishing an inter-satellite communication link for transmission of user data between the second satellite and any satellite of the first orbital plane other than the first satellite; and
the above applies regardless of whether the first satellite is latitude-decreasing or latitude-increasing; and

in which an identical inter-satellite communication link pattern as between the first orbital plane and the second orbital plane is applied between the second orbital plane and a third orbital plane adjacent to the second orbital plane, the third orbital plane being different from the first orbital plane.

E48. System for assisting in controlling inter-satellite communication links of a constellation of satellites orbiting the Earth, the constellation comprising $n$ orbital planes and $m$ satellites per orbital plane, wherein $n$ and $m$ are positive integer values, $n \neq m$, $n \geq 3$, and $m \geq 3$, and wherein a cross-orbit row is here defined as a group of n satellites, each being in a different orbital plane and, if a satellite $S_1$ in an orbital plane $O_1$ and a satellite $S_2$ in an adjacent orbital plane $O_2$ are the closest to one another, satellite $S_1$ and satellite $S_2$ are in the same cross-orbit row, the system comprising a processing device or set of processing devices, and the system being configured for:

> outputting (s10) parameters usable to control satellites of the constellation to establish an inter-satellite communication link topology for transmission of user data, in which, for each satellite of at least a subset of the satellites,

>> an inter-satellite communication link for transmission of user data is established between the satellite, hereinafter referred to as "first satellite", and a second satellite of the constellation, wherein

>>> the first satellite is in a first cross-orbit row;
>>> the second satellite is in a second cross-orbit row adjacent to the first cross-orbit row; and
>>> the position of the second satellite in the second cross-orbit row is offset from a position of a satellite, hereinafter referred to as "third satellite", in the second cross-orbit row, the third satellite being closest to the first satellite among the satellites in the second cross-orbit row;

>> it is refrained from establishing an inter-satellite communication link for transmission of user data between the first satellite and the third satellite; and
>> it is refrained from establishing an inter-satellite communication link for transmission of user data between the second satellite and any satellite of the first cross-orbit row other than the first satellite; and

> in which an identical inter-satellite communication link pattern as between the first cross-orbit row and the second cross-orbit row is applied between the second cross-orbit row and a third cross-orbit row adjacent to the second cross-orbit row, the third cross-orbit row being different from the first cross-orbit row.

E49. Computer program or set of computer programs comprising computer-readable instructions configured, when executed on a computer or set of computers, to cause the computer or set of computers to carry out the method according to any one of embodiments E1 to E45.

E50. Computer program product comprising, or computer-readable storage medium storing, a computer program or set of computer programs according to embodiment E49.

Although the present invention has been described based on detailed examples, the examples only serve to provide the skilled person with a better understanding and are not intended to limit the scope of the invention. The scope of the invention is defined by the appended claims.

Abbreviations:

| ASPL | average shortest path length |
| --- | --- |
| ASIC | application-specific integrated circuit |
| CD | compact disc |
| DVD | digital versatile disc |
| FPGA | field-programmable gate array |
| ISL | inter-satellite link |
| LEO | low Earth orbit |
| MEO | medium Earth orbit |
| RAM | random-access memory |
| RF | radio frequency |
| ROM | read-only memory |
| TT&C | telemetry, tracking, and command |

**Claims**

1. Method, carried out by a processing device or a set of processing devices, for assisting in controlling inter-satellite communication links of a constellation of satellites orbiting the Earth, the constellation comprising $n$ orbital planes and $m$ satellites per orbital plane, wherein $n$ and $m$ are positive integer values, $n \neq m$, $n \geq 3$, and $m \geq 3$, the method comprising:

> outputting (s10) parameters usable to control satellites of the constellation to establish an inter-satellite communication link topology for transmission of user data, in which, for each satellite of at least a subset of the satellites,

>> an inter-satellite communication link for transmission of user data is established between the satellite, hereinafter referred to as "first satellite", and a second satellite of the constellation, wherein

>>> the first satellite is in a first orbital plane;
>>> the second satellite is in a second orbital plane adjacent to the first orbital plane; and
>>> the position of the second satellite in the second orbital plane is offset from a position of a satellite, hereinafter referred to as "third satellite", in the second orbital plane, the third satellite being closest to the first satellite among the satellites in the second orbital plane;

it is refrained from establishing an inter-satellite communication link for transmission of user data between the first satellite and the third satellite;

it is refrained from establishing an inter-satellite communication link for transmission of user data between the second satellite and any satellite of the first orbital plane other than the first satellite; and

the above applies regardless of whether the first satellite is latitude-decreasing or latitude-increasing; and

in which an identical inter-satellite communication link pattern as between the first orbital plane and the second orbital plane is applied between the second orbital plane and a third orbital plane adjacent to the second orbital plane, the third orbital plane being different from the first orbital plane.

2. Method of claim 1, wherein, in the inter-satellite communication link topology, for each first satellite, a further inter-satellite communication link for transmission of user data is established between the first satellite and a satellite, hereinafter referred to as "fourth satellite", that is adjacent to the first satellite in the first orbital plane.

3. Method of claim 2, wherein, in the inter-satellite communication link topology, for each first satellite, yet a further inter-satellite communication link for transmission of user data is established, if not existing already, between the first satellite and a satellite, hereinafter referred to as "fifth satellite", in the first orbital plane.

4. Method according to any one of the preceding claims, wherein, in the inter-satellite communication link topology, for each first satellite, the position of the second satellite in the second orbital plane is offset from the position of the third satellite by a number $q$ of satellites between the second satellite and the third satellite, wherein $q$ is an integer value depending on $n, m$, and a number of inter-satellite communication links per satellite, and $q \geq 0$.

5. Method according to any one of the preceding claims, wherein the number of inter-satellite communication links per satellite is equal to 4.

6. Method of claim 5, wherein the inter-satellite communication link topology is defined by a jump set $\{[1\ 0]^T, [k\ 1]^T\}$, wherein

$k$ is an integer value with $k = \left\lceil \sqrt{\dfrac{2m}{n}} - 1 \right\rceil$;

operator $\lceil \cdots \rceil$ means rounding up to integer; and

the jump set uses a notation wherein each pair $[a1\ a2]^T$ means, for each first satellite of the subset of the satellites, establishing an inter-satellite communication link from the first satellite to a satellite that is offset in intra-orbital-plane direction by $a1$ and in inter-orbital-plane direction by $a2$.

7. Method of claim 5 or 6, wherein $m = cn$ and c is a positive integer value.

8. Method according to any one of claims 1 to 4, wherein the number of inter-satellite communication links per satellite is equal to 3.

9. Method of claim 8, wherein $m \geq 6$ and the inter-satellite communication link topology is defined by a jump set $\{[1\ 0]^T, [3\ 0]^T, [5\ 1]^T\}$, wherein

the subset of satellites comprises every other satellite in at least one orbital plane; and

the jump set uses a notation wherein each pair $[a1\ a2]^T$ means, for each first satellite of the subset of the satellites, establishing an inter-satellite communication link from the first satellite to a satellite that is offset in intra-orbital-plane direction by $a1$ and in inter-orbital-plane direction by $a2$.

10. Method of claim 8 or 9, wherein $m = 6n$.

11. Method, carried out by a processing device or a set of processing devices, for assisting in controlling inter-satellite communication links of a constellation of satellites orbiting the Earth, the constellation comprising $n$ orbital planes and $m$ satellites per orbital plane, wherein $n$ and $m$ are positive integer values, $n \neq m$, $n \geq 3$, and $m \geq 3$, and wherein a cross-orbit row is here defined as a group of n satellites, each being in a different orbital plane and, if a satellite $S_1$ in an orbital plane $O_1$ and a satellite $S_2$ in an adjacent orbital plane $O_2$ are the closest to one another, satellite $S_1$ and satellite $S_2$ are in the same cross-orbit row, the method comprising:

outputting (s10) parameters usable to control satellites of the constellation to establish an inter-satellite communication link topology for transmission of user data, in which, for each satellite of at least a subset of the satellites,

an inter-satellite communication link for transmission of user data is established between the satellite, hereinafter referred to as "first satellite", and a second satellite of the constellation, wherein

the first satellite is in a first cross-orbit row;
the second satellite is in a second cross-orbit row adjacent to the first cross-orbit row; and
the position of the second satellite in the second cross-orbit row is offset from a position of a satellite, hereinafter referred to as "third satellite", in the second cross-orbit row, the third satellite being closest to the first satellite among the satellites in the second cross-orbit row;

it is refrained from establishing an inter-satellite communication link for transmission of user data between the first satellite and the third satellite; and
it is refrained from establishing an inter-satellite communication link for transmission of user data between the second satellite and any satellite of the first cross-orbit row other than the first satellite; and

in which an identical inter-satellite communication link pattern as between the first cross-orbit row and the second cross-orbit row is applied between the second cross-orbit row and a third cross-orbit row adjacent to the second cross-orbit row, the third cross-orbit row being different from the first cross-orbit row.

12. System comprising a plurality of satellites forming an inter-satellite communication link topology established with a method according to any one of claims 1 to 11.

13. System for assisting in controlling inter-satellite communication links of a constellation of satellites orbiting the Earth, the constellation comprising $n$ orbital planes and $m$ satellites per orbital plane, wherein $n$ and $m$ are positive integer values, $n \neq m$, $n \geq 3$, and $m \geq 3$, the system comprising a processing device or set of processing devices, and the system being configured for:

outputting (s10) parameters usable to control satellites of the constellation to establish an inter-satellite communication link topology for transmission of user data, in which, for each satellite of at least a subset of the satellites,

an inter-satellite communication link for transmission of user data is established between the satellite, hereinafter referred to as "first satellite", and a second satellite of the constellation, wherein

the first satellite is in a first orbital plane;
the second satellite is in a second orbital plane adjacent to the first orbital plane; and
the position of the second satellite in the second orbital plane is offset from a position of a satellite, hereinafter referred to as "third satellite", in the second orbital plane, the third satellite being closest to the first satellite among the satellites in the second orbital plane;

it is refrained from establishing an inter-satellite communication link for transmission of user data between the first satellite and the third satellite;
it is refrained from establishing an inter-satellite communication link for transmission of user data between the second satellite and any satellite of the first orbital plane other than the first satellite; and
the above applies regardless of whether the first satellite is latitude-decreasing or latitude-increasing; and

in which an identical inter-satellite communication link pattern as between the first orbital plane and the second orbital plane is applied between the second orbital plane and a third orbital plane adjacent to the second orbital plane, the third orbital plane being different from the first orbital plane.

14. System for assisting in controlling inter-satellite communication links of a constellation of satellites orbiting the Earth, the constellation comprising $n$ orbital planes and $m$ satellites per orbital plane, wherein $n$ and $m$ are positive integer values, $n \neq m$, $n \geq 3$, and $m \geq 3$, and wherein a cross-orbit row is here defined as a group of n satellites, each being in a different orbital plane and, if a satellite $S_1$ in an orbital plane $O_1$ and a satellite $S_2$ in an adjacent orbital plane $O_2$ are the closest to one another, satellite $S_1$ and satellite $S_2$ are in the same cross-orbit row, the system comprising a processing device or set of processing devices, and the system being configured for:

outputting (s10) parameters usable to control satellites of the constellation to establish an inter-satellite communication link topology for transmission of user data, in which, for each satellite of at least a subset of the satellites,

an inter-satellite communication link for transmission of user data is established between the satellite, hereinafter referred to as "first satellite", and a second satellite of the constellation, wherein

the first satellite is in a first cross-orbit row;
the second satellite is in a second cross-orbit row adjacent to the first cross-orbit row; and
the position of the second satellite in the second cross-orbit row is offset from a position of a satellite, hereinafter referred to as "third satellite", in the second cross-orbit row, the third satellite being closest to the first satellite among the satellites in the second cross-orbit row;

it is refrained from establishing an inter-satellite communication link for transmission of user data between the first satellite and the third satellite; and
it is refrained from establishing an inter-satellite communication link for transmission of user data between the second satellite and any satellite of the first cross-orbit row other than the first satellite; and
in which an identical inter-satellite communication link pattern as between the first cross-orbit row and the second cross-orbit row is applied between the second cross-orbit row and a third cross-orbit row adjacent to the second cross-orbit row, the third cross-orbit row being different from the first cross-orbit row.

15. Computer program or set of computer programs comprising computer-readable instructions configured, when executed on a computer or set of computers, to cause the computer or set of computers to carry out the method according to any one of claims 1 to 11.

s10

outputting parameters usable to control
satellites of a constellation to establish an
inter-satellite communication link
topology for transmission of user data

Fig. 1

Fig. 2a

Fig. 2b

Fig. 3a

Fig. 3b

Fig. 4

Fig. 5a

Fig. 5b

Fig. 5c

Fig. 6

Fig. 7

Fig. 8a

Fig. 8b

Fig. 9

Fig. 10a

Fig. 10b

Fig. 11

Fig. 12a

Fig. 12b

Fig. 13

16

| receiving unit(s) | → | processing unit(s) | → | transmitting unit(s) |

161 · 162 · 163

Fig. 14

500

502 input device

504 output device

506 communication interface

507 main memory

508 ROM

509 storage device

processing unit

bus 505

503

Fig. 15

500

510 — parameters outputting unit

Fig. 16

Europäisches
Patentamt
European
Patent Office
Office européen
des brevets

# EUROPEAN SEARCH REPORT

**Application Number**

EP 25 21 1015

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/056948 A1 (MUKAE HISAYUKI [JP]) 23 February 2023 (2023-02-23) * abstract * * * paragraph [0010] * * paragraph [0178] * * figure 28 * ----- | 1-15 | INV. H04B7/185 H04B7/195 |
| A | US 6 553 226 B1 (WATSON JEFFREY LEE [US]) 22 April 2003 (2003-04-22) * abstract * * * column 2, line 40 - column 3, line 18 * * column 7, line 57 - column 10, line 37 * * figures * * claims * ----- | 1-15 | |

TECHNICAL FIELDS
SEARCHED      (IPC)

H04B

The present search report has been drawn up for all claims

| Place of search | Date of completion of the search | Examiner |
|---|---|---|
| The Hague | 3 March 2026 | Dejonghe, Olivier |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................................
& : member of the same patent family, corresponding
    document

EPO FORM 1503 03.82 (P04C01)

33

## ANNEX TO THE EUROPEAN SEARCH REPORT
## ON EUROPEAN PATENT APPLICATION NO.

EP 25 21 1015

This annex lists the patent family members relating to the patent documents cited in the above-mentioned European search report.
The members are as contained in the European Patent Office EDP file on
The European Patent Office is in no way liable for these particulars which are merely given for the purpose of information.

03-03-2026

| Patent document cited in search report | Publication date | Patent family member(s) | Publication date |
|---|---|---|---|
| US 2023056948 A1 | 23-02-2023 | JP 7233602 B2 | 06-03-2023 |
| | | JP WO2021182427 A1 | 16-09-2021 |
| | | US 2023056948 A1 | 23-02-2023 |
| | | WO 2021182427 A1 | 16-09-2021 |
| US 6553226 B1 | 22-04-2003 | NONE | |

EPO FORM P0459

For more details about this annex : see Official Journal of the European Patent Office, No. 12/82